(19) Europäisches Patentamt
European Patent Office
Office européen des brevets

(11) **EP 4 568 089 A1**

(12) **EUROPEAN PATENT APPLICATION**

(43) Date of publication:
**11.06.2025 Bulletin 2025/24**

(51) International Patent Classification (IPC):
**H02M 1/00** *(2006.01)* **H02M 3/335** *(2006.01)*

(21) Application number: **24217135.3**

(22) Date of filing: **03.12.2024**

(52) Cooperative Patent Classification (CPC):
**H02M 3/33592; H02M 1/0058; H02M 3/33523; H02M 3/33561**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.12.2023 US 202363607960 P**
**04.09.2024 US 202418824780**

(71) Applicant: **Power Integrations, Inc.**
**San Jose, CA 95138 (US)**

(72) Inventor: **Moore, Karl**
**Ely, CB4 3FJ (GB)**

(74) Representative: **Fish & Richardson P.C.**
**Highlight Business Towers**
**Mies-van-der-Rohe-Straße 8**
**80807 München (DE)**

(54) **FLYBACK CONVERTER WITH SECONDARY SIDE SWITCH USED FOR ENFORCED ZVS**

(57)    Zero voltage switching with a secondary switch (e.g., a synchronous rectifier) is described herein. The method allows a secondary side controller to dynamically calculate during a switching period a required secondary switch hold time to effectuate ZVS of a primary switch. By measuring a charge time and a discharge time during a switching period, the required secondary switch hold time may be determined without the need for primary to secondary communication.

**FIG. 1A**

EP 4 568 089 A1

**Description**

CROSS-REFERENCE TO RELATED APPLICATIONS

This application claims the benefit of U.S. Provisional Application No. 63/607,960, filed December 8, 2023, which is incorporated by reference in its entirety.

FIELD OF THE DISCLOSURE

The present invention relates to zero voltage switching with a secondary switch and more particularly to using a secondary switch to enable zero voltage switching in a flyback converter.

BACKGROUND INFORMATION

Many electronic devices, such as cell phones, laptops, etc., are powered by direct current (dc) power derived from a power supply. Conventional wall outlets generally deliver a high voltage alternating current (ac) power that needs to be converted to regulated dc power in order to be used as a power source for consumer electronic devices. Switch mode power converters, also referred to as switch mode power supplies (SMPSs), are commonly used due to their high efficiency, small size, and low weight.

Many electronic devices have multiple loads and require more than one dc power source in order to operate. For instance, an audio electronic device may have system components which operate at five volts and audio components which operate between twelve and twenty volts. In these applications a multiple output power converter converts ac power to multiple dc power outputs to provide regulated dc power to each of the multiple loads, namely the system components and the audio components. In some applications the regulated dc power outputs are regulated constant current (CC) outputs and/or regulated constant voltage (CV) outputs.

SUMMARY OF THE DISCLOSURE

In power converters, power converter systems, multi-output (multiple output) power converters, and multi-output power converter systems, efficiency may be improved by reducing switching losses. For instance, switching loss may be improved (i.e., reduced) by switching a primary switch according to a zero voltage switching (ZVS) switching cycle.

Zero voltage switching (ZVS) may advantageously reduce a voltage of the primary switch during switching. Ideally ZVS may control voltage across the primary switch to be substantially zero (*e.g.,* to approach zero volts) when the primary switch turns on. For instance, when the primary switch is realized as a power field effect transistor (FET), ZVS may be implemented by controlling a drain-to-source voltage of the FET to become substantially zero when the FET turns on.

Attempts to switch the primary side switch according to a ZVS cycle have been limited to systems which assume primary to secondary communication. For instance, a synchronous rectifier (SR) field effect transistor (FET) may be strategically switched on a second time during a switching cycle, based on information relating to the primary switch (e.g., state conditions, primary voltages, primary currents), to effectuate ZVS of the primary switch. Unfortunately, in modern state of the art power converters and power converter systems, communication from primary to secondary may not be available.

Accordingly, there is a need to avail primary switch ZVS in power converters and power converter systems without the constraint of having primary to secondary communication.

Controlling a secondary switch (*e.g.*, a synchronous rectifier and/or an SR FET) to achieve zero voltage switching of the primary switch is described herein. The method allows a secondary side controller to calculate a required secondary switch hold time (*i.e.,* a secondary switch on time). By measuring a forward pin voltage when the primary switch is conducting, or by measuring a ratio of a discharge time and a charge time of a switching cycle, the required secondary switch hold time may be determined without the need for primary to secondary communication.

BRIEF DESCRIPTION OF THE DRAWINGS

Non-limiting and non-exhaustive embodiments of controlling a secondary switch to achieve zero voltage switching are described with reference to the following figures, wherein like reference numerals refer to like parts throughout the various views unless otherwise specified.

**FIG. 1A** illustrates a power converter system according to a single output embodiment of the present disclosure.
**FIG. 1B** illustrates a power converter system according to another embodiment of the present disclosure.
**FIG. 1C** illustrates a power converter system according to another embodiment of the present disclosure.

FIG. 1D illustrates a power converter system according to another embodiment of the present disclosure.
FIG. 1E illustrates a power converter system according to a multiple output embodiment of the present disclosure.
FIG. 1F illustrates a power converter system according to another embodiment of the present disclosure.
FIG. 1G illustrates a power converter system according to another embodiment of the present disclosure.
FIG. 1H illustrates a power converter system according to another embodiment of the present disclosure.
FIG. 2A illustrates waveforms during a switching cycle.
FIG. 2B illustrates waveforms during a switching cycle according to an embodiment of the present disclosure.
FIG. 2C illustrates waveforms during a switching cycle according to an embodiment of the present disclosure.
FIG. 2D illustrates waveforms during a switching cycle according to another embodiment of the present disclosure.
FIG. 3A illustrates a conceptual flow diagram for zero voltage switching in a power converter system according to an embodiment of the present disclosure.
FIG. 3B illustrates a conceptual flow diagram for zero voltage switching in a power converter system according to another embodiment of the present disclosure.
FIG. 4 compares two switching cycles of a primary switch according to an embodiment of the present disclosure.
FIG. 5 illustrates a power converter system according to another embodiment of the present disclosure.
FIG. 6 illustrates a conceptual flow diagram for zero voltage switching in a power converter system according to an embodiment of the present disclosure.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the teachings herein. Also, common but well-understood elements that are useful or necessary in a commercially feasible embodiment are often not depicted in order to facilitate a less obstructed view of these various embodiments of controlling a secondary switch to achieve zero voltage switching.

DETAILED DESCRIPTION

In the context of the present application, when a transistor is in an "off-state" or "off" the transistor blocks current and/or does not substantially conduct current. Conversely, when a transistor is in an "on-state" or "on" the transistor is able to substantially conduct current. By way of example, in one embodiment, a high-voltage transistor comprises an N-channel metal-oxide-semiconductor (NMOS) field-effect transistor (FET) with the high-voltage being supported between the first terminal, a drain, and the second terminal, a source. In some embodiments an integrated controller circuit may be used to drive a power switch when regulating energy provided to a load. Also, for purposes of this disclosure, "ground" or "ground potential" refers to a reference voltage or potential against which all other voltages or potentials of an electronic circuit or integrated circuit (IC) are defined or measured. Additionally, according to power electronics theory, "power" transfer may be implied by "energy" transfer; conversely, "energy" transfer may be implied by "power" transfer (i.e., power is related to the rate of change of energy).

A multiple output power converter may be used to provide regulated dc power to multiple loads. The loads can be passive and/or active loads including discrete semiconductor devices, microprocessors, controllers, mixed signal circuit components, and the like. In providing regulated dc power, the multiple output power converter may regulate output current to a constant current (CC) output and/or regulate output voltage to a constant voltage (CV) output. Additionally, system voltages may be defined relative to how the multiple output power converter provides power. For instance, a multiple output power converter may provide a CC output operating at approximately fifty volts, a CV output regulated to twelve volts, and a CV output regulated to five volts.

Power may be transferred via an energy transfer element (e.g., a transformer) from a primary side to a secondary side according to a switching cycle. For instance, a primary switch may switch according to a switching cycle whereby a primary winding receives input power for part of the switching cycle and one or more secondary windings provide power for another part of the switching cycle. When power is transferred such that current in a secondary side winding (i.e., a secondary current) reduces to substantially zero before the completion of a switching cycle, then the mode of operation may be referred to as discontinuous conduction mode (DCM). Alternatively, when power (i.e., energy) is transferred such that current in secondary side winding does not reduce to zero before completion of a switching cycle, then the mode of operation may be referred to as continuous conduction mode (CCM).

Additionally, during a single switching cycle (i.e., single switching period), power (i.e., energy) may be transferred to a select one of multiple outputs.

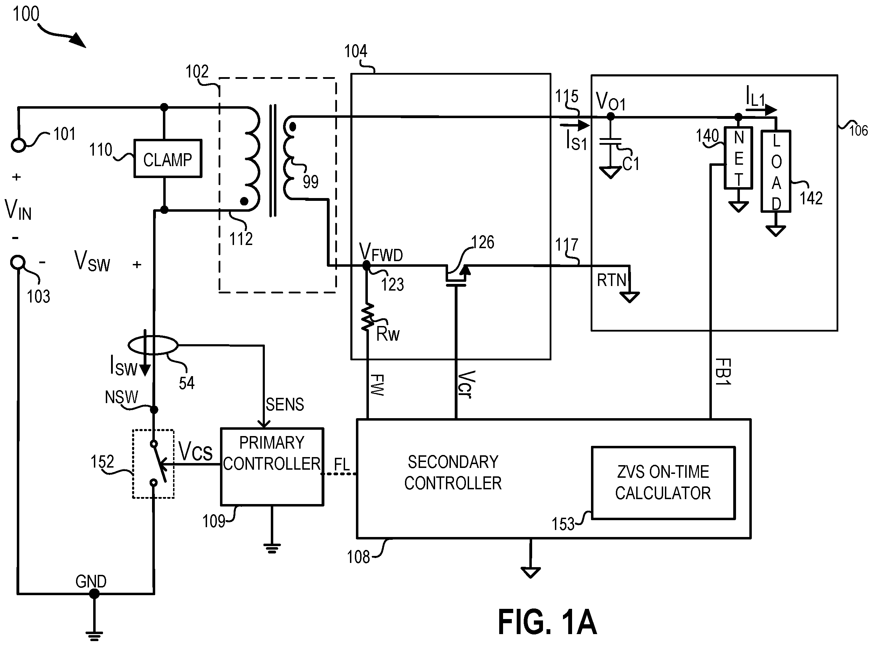

FIG. 1A illustrates a power converter system 100 according to a single output embodiment. The power converter system 100 includes an energy transfer element 102, a secondary switches block 104, a load circuit 106, a secondary controller 108, a primary controller 109, a clamp 110, and a primary switch 152. The energy transfer element 102 includes a primary winding 112 and a secondary winding 99. The secondary switches block 104 includes a N-channel field effect transistor (NFET) 126.

The output power converter system 100 may convert input power derived from a rectified ac line voltage $V_{IN}$ and provide output power with output voltage Voi and secondary current Isi. Alternatively, and additionally, input power may be derived from a high voltage power source. The load circuit 106 includes a feedback network 140, a filter capacitor C1, and a first load 142.

As illustrated, the feedback network 140, the filter capacitor C1, and the first load 142 are electrically coupled. The feedback network 140 may provide a feedback signal FB to the secondary controller 108. In the steady state, the power converter system 100 of FIG. 1A may be configured to regulate power (*e.g.*, output voltage $V_{O1}$) delivered to the first load 142. For instance, the secondary controller 108 may regulate the output voltage $V_{O1}$ based, at least in part, upon the feedback signal FB1.

Primary controller 109 provides a primary control signal Vcs to a control terminal (*e.g.*, a gate) of the primary switch 152. In this manner the primary controller 109 controls the primary current Isw for energizing primary winding 112. The primary sense element 54 may provide a sense signal SENS to the primary controller to locally regulate a maximum value of the primary current Isw; additionally, the clamp 110 may be connected in parallel with the primary winding 112 to limit (*i.e.*, clamp) the switch voltage Vsw. As illustrated, the primary controller 109 may be configured to operate with signals (*e.g.*, switch voltage Vsw and primary control signal Vcs) which are referenced to primary ground GND.

As discussed above, secondary controller 108 may receive feedback signal FB1 from the load circuit 106 (*i.e.,* from the feedback network 140). Additionally, as illustrated the secondary controller 108 may communicate with the primary controller 109 through a signal FL.

The power converter system 100 may be configured as a flyback converter whereby the primary switch 152 undergoes switching according to a switching cycle. Thus, during a switching cycle, energy may be transferred via secondary current Isi on circuit path 115. Although illustrated as a flyback converter in the example of **FIG. 1A**, other configurations of power converter system 100 are possible. For instance, the teachings herein may also be applicable to forward converters and/or other converter topologies.

According to the teachings herein, secondary controller 108 may include a zero voltage switching (ZVS) on-time calculator 153. The secondary controller 108 may calculate a hold time (*i.e.,* an on time) for controlling a secondary switch (*e.g.,* a synchronous rectifier (SR)) during a switching cycle (*i.e.,* a switching cycle of the primary switch 152). This secondary hold time may be used to control the secondary switch to turn on during a switching cycle to effectuate ZVS operation of the primary switch 152.

The theory of operation and equations relating to the ZVS on-time calculator 153 may be based, at least in part, upon the oscillatory (i.e., ringing) behavior at primary node NSW, where the primary switch 152 electrically couples to primary winding 112. According to switch mode power supply theory, ringing (*i.e.*, oscillations) may occur at the primary node NSW due, at least in part, to a primary capacitance Cpri and a primary inductance Lpri at primary node NSW. The resonant oscillation period (*i.e.*, ringing period) may often be referred to as an idle ring period TIR.

The primary capacitance Cpri may comprise capacitance of the primary switch 152. For instance, when the primary switch 152 is realized using an N-channel field effect transistor (NFET), then the primary capacitance Cpri may comprise capacitance associated with an NFET output capacitance.

The primary inductance Lpri may comprise inductance relating to the primary winding 112. For instance, it may comprise a magnetizing inductance of the primary winding.

According to circuit theory, a simple approximation relating idle ring period TIR to primary capacitance Cpri and primary inductance Lpri may be given by equation EQ. 1.

$$ TIR = 2\pi\sqrt{CpriLpri} \qquad\qquad \text{EQ. 1} $$

In accordance with the teachings herein, a secondary switch hold time $T_{CHR\_ZVS}$ may be determined from energy storage considerations. Alternatively, and additionally, a secondary switch hold time $T_{CHR\_ZVS}$ may also be referred to as a secondary switch on time $T_{CHR\_ZVS}$ without departing from the scope of the present application. In this context either a synchronous rectifier (SR) and/or a secondary switch may operate in an "on-state" during the secondary switch hold time $T_{CHR\_ZVS}$.

As will be understood by those of skill in the art, inductance energy may be represented mathematically as: $E_L = 0.5 L_{Pri} I^2_{pkZVS}$ and capacitance energy may be represented as: $Ec = 0.5 C_{Pri} V^2_{IN}$.

Based, at least in part, on the principles of energy storage, inductance energy may be equated with capacitance energy to determine a peak inductor current Ipk.

$$Ipk = V_{IN} \sqrt{\frac{Cpri}{Lpri}}$$
<div align="right">EQ. 2</div>

Then, based on equation EQ. 2 and the inductor current equation (di/dt = V/I, $I_{pk}/T_{CHR\_ZVS} = V_{or}/L_{pri}$), an approximation of the secondary switch hold time $T_{CHR\_ZVS}$ may be determined by equation EQ. 3.

$$T_{CHR\_ZVS} \sim \frac{V_{IN}}{NVout} \sqrt{CpriLpri}$$
<div align="right">EQ. 3</div>

Here equation EQ. 3 introduces a winding's turns ratio N and output voltage Vout. In the case of a single-output flyback converter, as illustrated by **FIG. 1A**, output voltage Vout is output voltage $V_{O1}$; and the turns ratio N may be determined by a winding's ratio of the primary winding 112 to the secondary winding 99.

Equation EQ. 3 may be generalized by removing the dependence on the turns ratio N and introducing the concept of reflected output voltage Vor. With the introduction of reflected output voltage Vor and using equation EQ. 1, equation EQ. 3 may be recast as equation EQ. 4.

$$T_{CHR\_ZVS} = \frac{V_{IN}}{Vor} \frac{TIR}{2\pi}$$
<div align="right">EQ. 4</div>

For comparison a more exact relationship for secondary switch hold time $T_{CHR\_ZVS}$ may be given by equation EQ. 5.

$$T_{CHR\_ZVS} = \frac{TIR}{2\pi} \sqrt{\left[ \left( \frac{V_{IN}}{Vor} \right)^2 - 1 \right]}$$
<div align="right">EQ. 5</div>

With reference to **FIG. 1A**, a forward pin voltage $V_{FWD}$ at node 123 may be related to input voltage $V_{IN}$, output voltage Vout, and winding's turn ratio N by equation EQ. 6.

$$V_{FWD} = \frac{V_{IN}}{N} + Vout$$
<div align="right">EQ. 6</div>

In turn, a relationship for the ratio of input voltage $V_{IN}$ to reflected output voltage Vor may be determined by equation EQ. 7 in terms of the forward pin voltage $V_{FWD}$ at node 123.

$$\frac{V_{IN}}{Vor} = \frac{V_{FWD}}{Vout} - 1$$
<div align="right">EQ. 7</div>

Additionally, as illustrated in **FIG. 1A**, the secondary winding 99 is electrically coupled to resistor RW and to a drain of NFET 126 at node 123 (*i.e.*, forward pin node 123).

According to the teachings herein, the ZVS on-time calculator 153 may dynamically (*e.g.*, dynamically within a switching cycle of primary switch 152) calculate a secondary switch hold time $T_{CHR\_ZVS}$. According to equation EQ. 7, the ZVS on-time calculator 153 may use readily and dynamically measurable quantities, namely the forward pin voltage $V_{FWD}$ at node 123 and the output voltage Vout (*e.g.*, output voltage $V_{O1}$).

Accordingly, equation EQ. 1 through equation EQ. 7 may also be time dependent equations whereby the values (*e.g.*, the value of the forward pin voltage $V_{FWD}$ at node 123 and the value of the output voltage Vout) are time sampled values. For instance, the forward pin voltage $V_{FWD}$ at node 123 may be sampled at a discrete time during a switching cycle of the primary switch 152.

Thus, as one of ordinary skill in the art may appreciate, a ZVS on-time calculator 153 may be realized using digital, analog, and/or algorithm-based approaches. For instance, calculations may be programmed into the controller 108.

As illustrated, the NFET 126 may be configured to operate as a synchronous rectifier, and the secondary controller 108 may provide a control signal Vcr to gate (control) the NFET 126 (*i.e.,* to gate the SR). According to the teachings herein, the NFET 126 may also be configured to avail zero voltage switching (ZVS) of the primary switch.

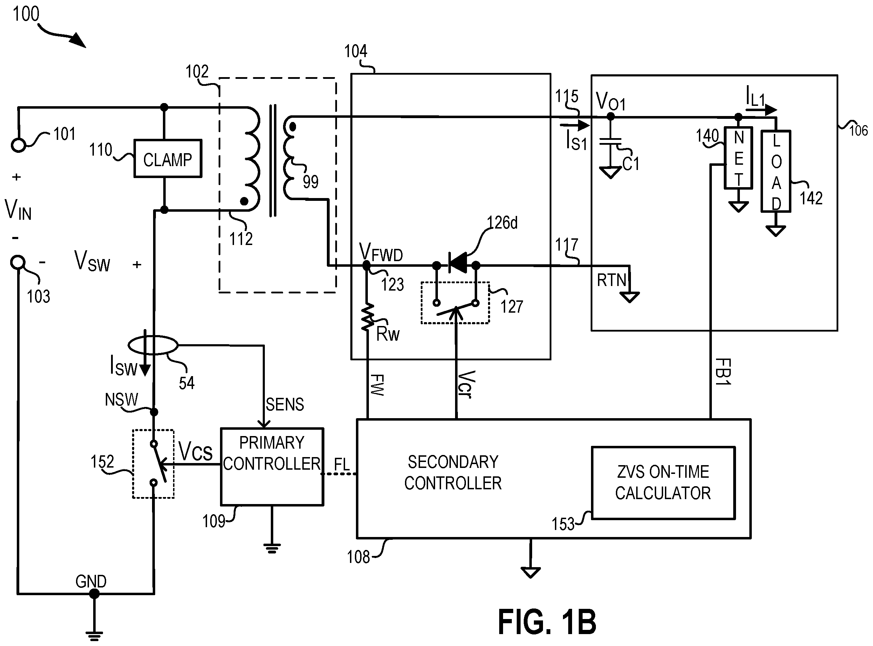

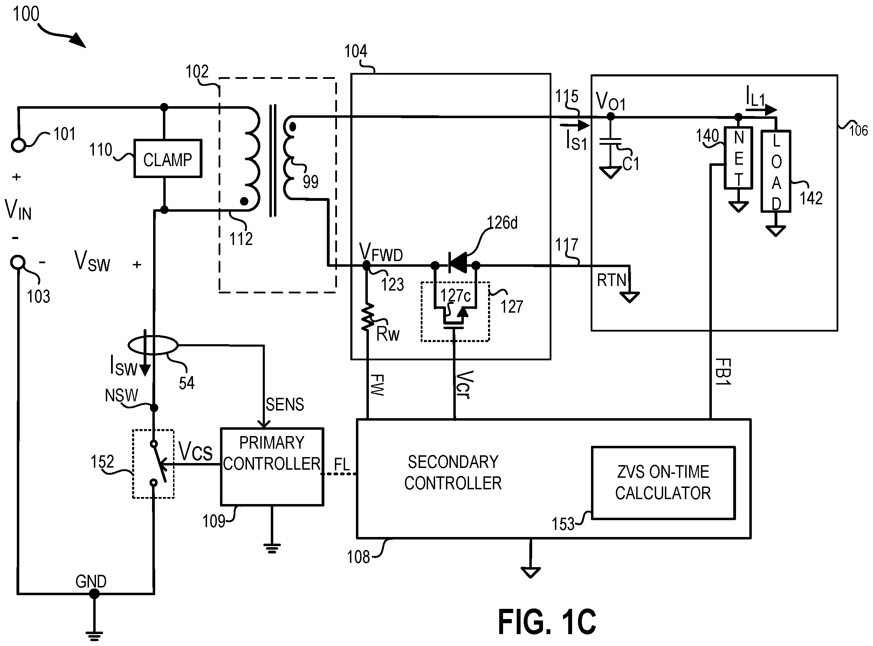

Although the NFET 126 of **FIG. 1A** may be configured to operate as a synchronous rectifier, other configurations are possible. For instance, **FIG. 1B** and **FIG. 1C** illustrate a power converter system 100 according to another embodiment of the present disclosure using a diode 126d in parallel with a secondary switch 127. The diode 126d may be configured to operate as a rectifier, and the secondary switch 127 may be configured to avail ZVS.

As illustrated in **FIG. 1C**, the secondary switch 127 may be realized using an NFET 127c. Additionally, diode 126d may be distinguished (*e.g.*, separate) from a body diode of NFET 127c; and diode 126d may be realized to sustain a current like that of NFET 126, while the NFET 127c may be realized for a much lower current rating then that of diode 126d. For instance, the diode 126d may be realized with a discrete high-current diode, separate from NFET 127c.

Thus, NFET 127c may be advantageously realized with smaller device area (*e.g.*, smaller semiconductor chip area) than that of NFET 126. Accordingly, the NFET 127c may also be referred to as an auxiliary NFET 127c without departing from the scope of the present disclosure. For instance, auxiliary NFET 127c may be turned on only once during a switching cycle to avail zero voltage switching (ZVS) of the primary switch 152.

Also, according to the teachings herein, the secondary controller 108 may use information derived from a forward pin voltage $V_{FWD}$ at node 123 (*i.e.*, a forward pin node 123). For instance, the secondary controller 108 may receive a forward pin signal FW provided from resistor RW coupled to node 123. The ZVS on-time calculator 153 may perform calculations based, at least in part, upon the forward pin signal FW and/or upon the feedback signal FB 1.

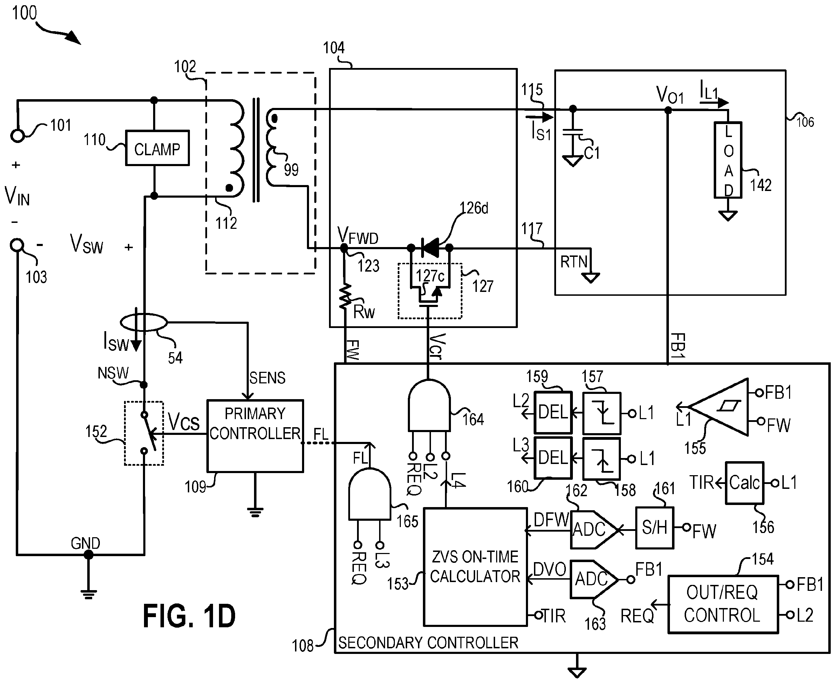

As disclosed herein, the ZVS on-time calculator 153 and the secondary controller 108 may comprise digital and/or analog circuits configured to calculate a secondary switch hold time $T_{CHR\_ZVS}$ to achieve ZVS. For instance, **FIG. 1D** illustrates a power converter system 100 using a secondary controller 108 with both digital and analog features.

The secondary controller 108 of **FIG. 1D** includes the ZVS on-time calculator 153, an output control block 154, a comparator 155, an idle ring period calculator 156, edge detection blocks 157-158, delay blocks 159-160, a sample and hold circuit 161, analog to digital converters 162-163, an AND gate 164, and an AND gate 165. The secondary controller 108 receives the forward pin signal FW and the feedback signal FB1. As illustrated, the feedback signal FB1 may be directly derived from (*e.g.*, equal to) the output voltage Voi. In other embodiments (*e.g.*, the embodiment of **FIG. 1A**), the feedback signal FB1 may be proportional to (*e.g.*, a scaled fraction of) the output voltage $V_{O1}$.

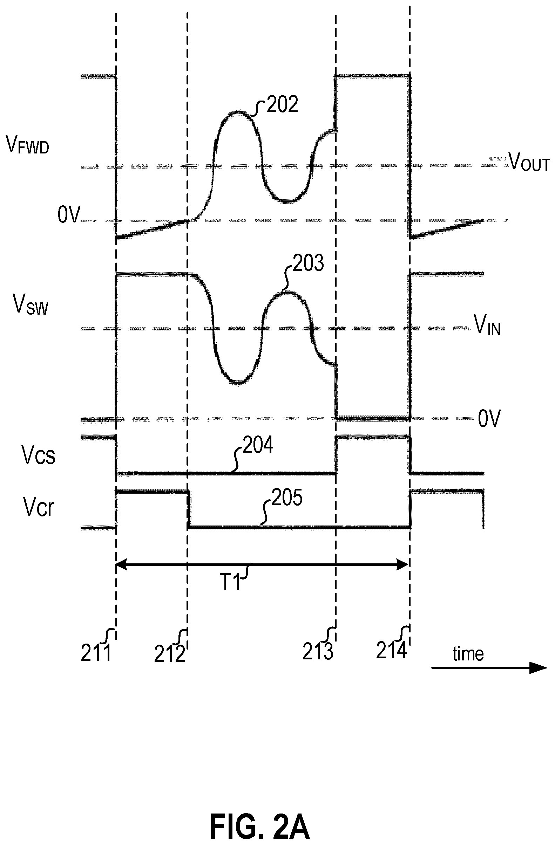

As illustrated, the comparator 155 may compare the feedback signal FB1 (*i.e.*, the output voltage $V_{O1}$) with the forward pin signal FW. In response, the comparator 155 may provide comparator output signal L1; and as discussed herein with respect to **FIG. 2A-2D**, an idle ring period TIR may be calculated in response to transitions of the comparator output signal L1.

The edge detection block 157 may receive the comparator output signal L1 and trigger the delay block 159 when the comparator output signal L1 transitions from high to low. According to the teachings herein, the delay block 159 may provide delay output signal L2 after one quarter of an idle ring period TIR has elapsed.

Similarly, the edge detection block 158 may receive the comparator output signal L1 and trigger the delay block 160 when the comparator output signal L1 transitions from low to high. According to the teachings herein, the delay block 160 may provide delay output signal L3 after one quarter of an idle ring period TIR has elapsed.

The output control block 154 may provide a request signal REQ based upon the feedback signal FB 1 and the delay output signal L2. For instance, the output control block 154 may determine there is a demand for power delivery to the load 142 based on feedback signal FB1 (*e.g.*, the feedback signal FB1 reduces in value). Additionally, the output control block 154 may assert a request signal REQ in response to the demand and in response to the delay output signal L2.

The sample and hold circuit 161 may sample the forward pin signal FW and provide the sample to the analog to digital converter (ADC) 162. The ADC 162 may in turn provide a digital forward pin signal DFW (*i.e.*, the digital representation of the forward pin signal FW).

Similarly, ADC 163 may convert feedback signal FB 1 and provide a digital output voltage signal DVO (*i.e.*, the digital representation of the feedback signal FB1).

As illustrated, the ZVS on-time calculator 153 may receive the digital output voltage signal DVO, the digital forward pin signal DFW, and the idle ring period TIR. In response, the ZVS on-time calculator 153 may assert a ZVS calculator signal L4.

According to the teachings herein, the ZVS on-time calculator 153 may perform calculations based, at least in part, on one or more of equations EQ. 1-7. For instance, the ZVS on-time calculator 153 may calculate the secondary switch hold time $T_{CHR\_ZVS}$ according to equation EQ. 8, derived from equation EQ. 4 and equation EQ. 7.

$$T_{CHR\_ZVS} \ = \ \frac{TIR}{2\pi} \left( \frac{V_{FWD}}{Vout} - 1 \right) \qquad \text{EQ. 8}$$

Also as illustrated, AND gate 164 receives the request signal REQ, the ZVS calculator signal L4, and the delay output signal L2. As shown the control signal $V_{CR}$ may be exerted to drive the gate of NFET 126 based upon the logical AND function of the request signal REQ, the ZVS calculator signal L4, and the delay output signal L2. As one of ordinary skill in the art may appreciate, there may be additional components and/or buffer stages between the output of the AND gate 164 and the gate of NFET 127c. Alternatively, and additionally, the secondary controller 108 of **FIG. 1D** may be used with embodiments (*e.g.*, the embodiment of **FIG. 1A**) using NFET 126.

Additionally, AND gate 165 receives the request signal REQ and the delay output signal L3. As shown the signal FL may be exerted and coupled to the primary controller 109 to close primary switch 152 based, at least in part, upon the logical AND function of the request signal REQ and the delay output signal L3.

Although, **FIG. 1A** through **FIG. 1D** show a power converter system 100 according to a single output embodiment; other embodiments are possible.

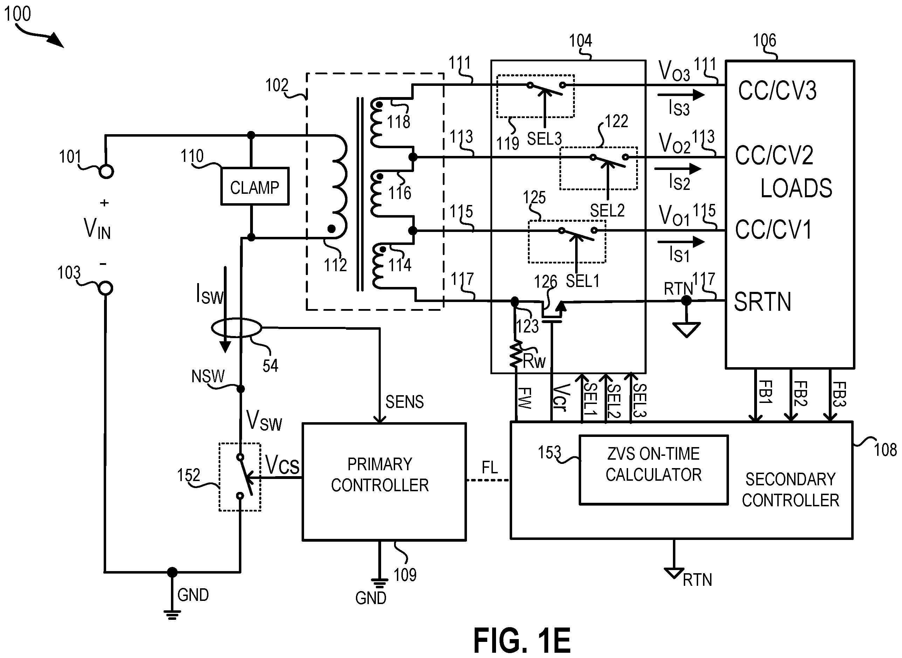

For instance, **FIG. 1E** illustrates a power converter system 100 according to a multiple output (*i.e.*, multi-output) embodiment. The power converter system 100 of FIG. 1E may be configured like that of **FIG. 1A**, except, as described below, the power converter system 100 of FIG. 1E has multiple outputs.

As illustrated, the power converter system 100 includes an energy transfer element 102, a secondary switches block 104, load circuit 106, a secondary controller 108, a primary controller 109, a clamp 110, and a primary switch 152. The energy transfer element 102 includes a primary winding 112 and secondary windings 114, 116, 118. The secondary switches block 104 includes NFET 126, and secondary switches 119, 122, 125. In other examples, power converter system 100 may include a single secondary winding with multiple outputs derived therefrom.

The multiple output power converter system 100 may convert input power derived from a rectified ac line voltage $V_{IN}$ into output power including multiple output voltages $V_{O1}$-$V_{O3}$, and secondary currents $I_{S1}$-$I_{S3}$. Alternatively, and additionally, input power may be derived from a high voltage power source. The load circuit 106 includes a CC/CV3 port, a CC/CV2 port, a CC/CV1 port, which may be regulated dc power ports, and a secondary ground return port SRTN.

Additionally, the CC/CV3 port may be a constant current (CC) port (*i.e.*, secondary current $I_{S3}$ controlled to be constant) and/or constant voltage (CV) port (*i.e.*, output voltage $V_{O3}$ controlled to be constant) depending on load conditions at the CC/CV3 port. The CC/CV2 port may be a constant current (CC) port (*i.e.*, secondary current $I_{S2}$ controlled to be constant) and/or constant voltage (CV) port (*i.e.*, output voltage $V_{O2}$ controlled to be constant) depending on load conditions at the CC/CV2 port; and the CC/CV1 port may be a constant current (CC) port (*i.e.*, secondary current Isi controlled to be constant) and/or constant voltage (CV) port (*i.e.*, output voltage $V_{O1}$ controlled to be constant) depending on load conditions at the CC/CV1 port.

For instance, in one embodiment the CC/CV3 port may be a CC port and secondary current $I_{S3}$ may be a regulated load current while output voltage $V_{O3}$ is determined, at least in part, by a load of the CC/CV3 port. Additionally, the CC/CV1 port and the CC/CV2 port may be CV ports whereby output voltage $V_{O1}$ and output voltage $V_{O2}$ are regulated. The secondary ground return port SRTN may be electrically coupled to secondary ground RTN.

In one embodiment, output voltages $V_{O1}$-$V_{O3}$ may be determined, at least in part, by the energy transfer element 102. For instance, turns winding ratios of the secondary windings 114, 116, 118 with primary winding 112 and transformer construction (*e.g.*, stacked secondary windings) may be configured for a highest voltage CC/CV3 port (*e.g.*, a voltage greater than forty volts). The CC/CV1 port and CC/CV2 port may be regulated to lower voltages (*e.g.*, voltages between three and forty volts). In one embodiment, the CC/CV2 port may be a CV port with output voltage $V_{O2}$ regulated to a lower voltage (*e.g.*, twenty volts); and the CC/CV1 port may be a CV port with output voltage $V_{O1}$ regulated to a lowest voltage (*e.g.*, five volts).

Alternatively, and additionally, the output voltages $V_{O1}$-$V_{O3}$ may be determined by the operation of secondary switches 119, 122, 125. For instance, secondary switch 119 may be controlled such that the output voltage $V_{O3}$ is more than output voltage $V_{O2}$.

As illustrated, secondary windings 114, 116, and 118 are electrically coupled in a stacked (*i.e.*, series) configuration according to transformer "dot" notation. As shown, secondary switch 119 is electrically coupled between the "dot" terminal of secondary winding 118 and the CC/CV3 port on a circuit path 111. Secondary switch 122 is electrically coupled between the "dot" terminal of secondary winding 116 and the CC/CV2 port on a circuit path 113; and secondary switch 125 is electrically coupled between the "dot" terminal of secondary winding 114 and the CC/CV1 port on a circuit path 115.

The N-type FET (NFET) 126 is coupled between secondary winding 114 and secondary RTN in circuit path 117 as shown. As discussed above with regards to **FIG. 1A**, NFET 126 may be configured to operate as a synchronous rectifier and switched on and off by control signal Vcr. Additionally, as discussed above with regards to **FIG. 1B** and **FIG. 1C,** NFET 126 may be replaced with a diode 126d and a secondary switch 127 connected in parallel.

Also as illustrated the primary winding 112 and the primary switch 152 can be connected between input terminals 101, 103 to receive rectified ac line voltage $V_{IN}$ relative to a primary ground GND. During a switching cycle (*i.e.*, switching period), while the primary switch 152 is closed (*i.e.*, conducting), the primary winding 112 may be energized by an increasing (*i.e.*, ramping) primary current Isw. According to the theories of magnetics and transformers, when the primary switch 152 is opened (*i.e.*, transitions from conducting state to a blocking state), energy within the primary winding 112 may be transferred to one or more of the secondary windings 114, 116, 118.

Secondary controller 108 receives feedback signals FB1-FB3 from the load circuit 106, communicates with the primary controller 109 through a signal FL, and provides control signals SEL1-SEL3 to the secondary switches block 104. As illustrated, the secondary controller 108 may be configured to operate with signals (*e.g.*, feedback signals FB1-FB3 and multiple output voltages $V_{O1}$-$V_{O3}$) which are referenced to the secondary ground RTN. Accordingly, the signal FL may be an optically coupled, magnetically coupled, and/or capacitively coupled signal FL to allow communication with the primary controller 109, which is referenced to primary ground GND.

As described herein, the secondary controller 108 may provide one or more control signals SEL1-SEL3 to selectively control (*i.e.,* switch) the transfer of energy (*i.e.,* power) to the load circuit 106 by selecting circuit paths (*e.g.*, circuit path 111, circuit path 113, and/or circuit path 115). As illustrated, secondary controller 108 provides control signals SEL1, SEL2, SEL3 to secondary switches 125, 122, 119, respectively. Control signals SEL1, SEL2, SEL3 may, in turn, respectively gate switches 125, 122, 119 to operate in the on-state or off-state.

During a switching cycle, energy may be transferred via secondary current $I_{S3}$ on circuit path 111 when secondary switch 119 is closed (*i.e.,* operates in the on-state) while both secondary switches 125, 122 are open (*i.e.,* both operate in the off-state). As illustrated, circuit path 111 is a switched circuit path including secondary switch 119 and electrically coupled to the CC/CV3 port of load circuit 106. Alternatively, when secondary switch 122 is closed (*i.e.,* operates in the on-state) and secondary switches 125, 119 are open (*i.e.,* operate in the off-state) energy may be transferred via secondary current $I_{S2}$ on circuit path 113. As illustrated, circuit path 113 is a switched circuit path including secondary switch 122 and electrically coupled to the CC/CV2 port of load circuit 106. Alternatively, when secondary switch 125 is closed (*i.e.,* operates in the on-state) and secondary switches 122, 119 are open (*i.e.,* operate in the off-state) energy may be transferred via secondary current Isi on circuit path 115. As illustrated, circuit path 115 is a switched circuit path including secondary switch 125 and electrically coupled to the CC/CV1 port of load circuit 106.

As discussed above, secondary controller 108 may include a zero voltage switching (ZVS) on-time calculator 153. According to the teachings herein, the secondary controller 108 may calculate a hold time (*e.g.*, secondary switch hold time $T_{CHR\_ZVS}$) for controlling a synchronous rectifier (SR) during a switching cycle (*i.e.,* a switching cycle of the primary switch 152) based, in part, upon the forward pin signal FW and a select output.

In the multiple output embodiment of **FIG. 1E**, a select output may refer to an output which is active and/or selected during a switching cycle. For instance, during a switching cycle, when secondary switch 125 is closed, the select output would correspond with output voltage Voi. Alternatively, when secondary switch 122 is closed, the select output would correspond with output voltage $V_{O2}$. Accordingly, equation EQ. 7 may be reformulated by replacing output voltage Vout with a select output voltage Vo. For instance, when the select output corresponds with output voltage $V_{O2}$, then the select output voltage Vo is output voltage $V_{O2}$.

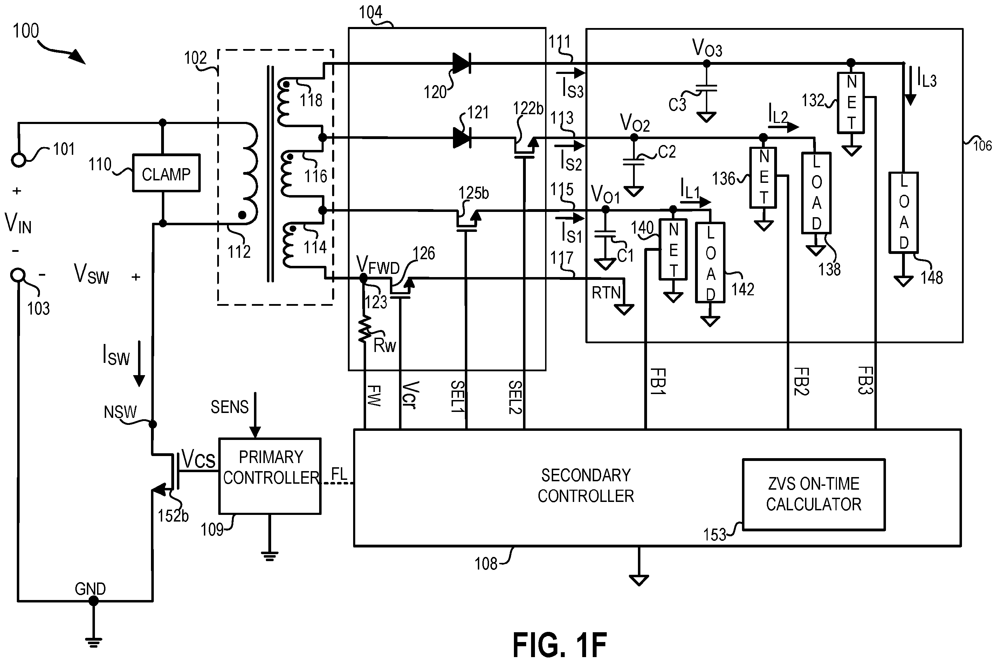

**FIG. 1F** illustrates a multiple output (*i.e.,* multi-output) power converter system 100 according to an embodiment of **FIG. 1E**. Primary switch 152 is realized with an N-type field effect transistor (FET) 152b. Secondary switch 119 is replaced with a diode 120. As illustrated, diode 120 is electrically coupled between the "dot" terminal of secondary winding 118 and the CC/CV3 port on circuit path 111. In applications where the output voltage $V_{O3}$ necessarily has the highest voltage value of the multiple output voltages $V_{O1}$-$V_{O3}$, then secondary switch 119 may be replaced by diode 120 to advantageously simplify the secondary switches block 104 and obviate the need for control signal SEL3.

Secondary switch 122 is realized with an N-type FET 122b; as illustrated secondary switch 122 is electrically coupled with a diode 121 between the "dot" terminal of secondary winding 116 and the CC/CV2 port on circuit path 113. Secondary switch 125 is realized with N-type FET 125b; secondary switch 125b is electrically coupled between the "dot" terminal of secondary winding 114 and the CC/CV1 port on circuit path 115.

The N-type FETs 152b, 122b, 125b, 126 may be integrated and/or discrete power FETs. In one embodiment the N-type FETs 152b, 122b, 125b, 126 may be enhancement mode FETs.

The load circuit 106 includes feedback networks 140, 136, 132 which can respectively provide feedback signals FB1, FB2, FB3 to the secondary controller 108. Additionally, the load circuit 106 includes filter capacitors C1-C3 electrically coupled to the first load 142, second load 138, and the third load 148, respectively. In the steady state, the multiple output power converter system 100 of **FIG. 1F** can be configured to regulate the power delivered to the first load 142, second load 138, and third load 148.

For instance, feedback networks 140, 136, 132 may comprise divider networks to provide feedback signals FB1, FB2, FB3 for closed loop regulation of output voltages $V_{O1}$, $V_{O2}$, $V_{O3}$, respectively. In the steady state, the feedback signals FB1, FB2, FB3 may be voltages derived or sampled from the output voltages $V_{O1}$, $V_{O2}$, $V_{O3}$, respectively. In this manner power delivered to the first load 142 may be regulated as a CV output (*i.e.,* regulated output voltage $V_{O1}$), power delivered to the second load 138 may be regulated as a CV output (*i.e.,* regulated output voltage $V_{O2}$); and power delivered to the third load 148 may be regulated as a CV output (*i.e.,* regulated output voltage $V_{O3}$).

As described above, secondary controller 108 may communicate with primary controller 109 via the signal FL (*e.g.*, a magnetically coupled signal FL). For instance, using the signal FL, the primary controller 109 may transmit a handshake to the secondary controller 108 to indicate a power good condition. Alternatively, and additionally, using the signal FL, the secondary controller 108 may transmit a request for more energy transfer. In response to the request, the primary controller 109 may vary primary control signal Vcs to close primary switch 152 and to energize the primary winding 112.

As illustrated, secondary controller 108 may receive a forward pin signal FW and feedback signals FB1-FB3; and secondary controller 108 may provide control signals SEL1, SEL2, and Vcr. As discussed herein control signals SEL1, SEL2 may be used to selectively control (*i.e.*, switch) the transfer of energy (*i.e.*, power) to the load circuit 106 by selecting circuit paths (*e.g.*, circuit path 111, circuit path 113, and/or circuit path 115). Additionally, control signal Vcr may be used to drive the gate of N-type FET 126 to operate as a synchronous rectifier.

As discussed above, feedback signals FB1-FB3 may be sampled (*i.e.*, measured) signals used within the secondary controller 108 for closed loop control of CV outputs. However, as one of ordinary skill in the art may appreciate, other configurations are possible. For instance, as discussed herein, the secondary controller 108 may also be configured to provide closed loop control of a CC output.

As illustrated, a forward pin voltage $V_{FWD}$ may exist at node 123; and an optional passive component (*i.e.,* resistor Rw) may be electrically coupled between the secondary winding 114 at node 123 to provide the forward pin signal FW to the secondary controller 108. In some embodiments, the forward pin signal FW may be equivalent to forward pin voltage $V_{FWD}$ while in other embodiments the forward pin signal FW may be attenuated with respect to forward pin voltage $V_{FWD}$.

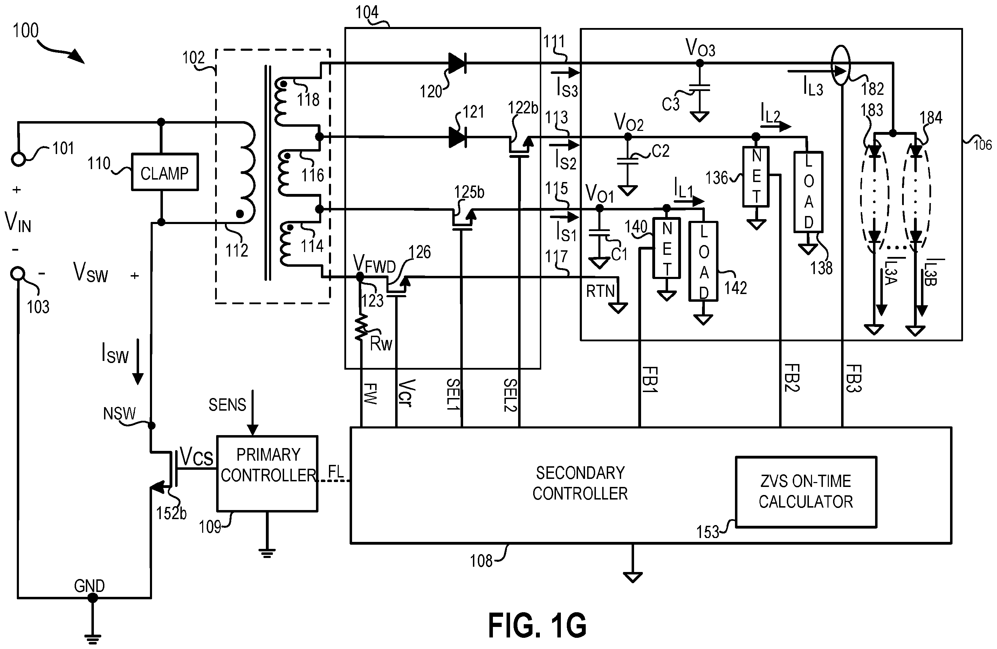

**FIG. 1G** illustrates a multiple output power converter system 100 according to another embodiment of **FIG. 1E.** The embodiment of **FIG. 1G** is like the embodiment of **FIG. 1F**, except the load 148 is replaced by LED strings 183-184; and a current sense element 182 samples load current $I_{L3}$ to provide feedback signal FB3. In the steady state, the multiple output power converter system 100 of **FIG. 1G** can be configured to regulate the power delivered to the LED strings 183-184 as a CC output (*i.e.,* regulated load current $I_{L3}$).

Additionally, the load circuit 106 includes multiple parallel-connected light emitting diode (LED) strings 183-184, a first load 142, and a second load 138. As illustrated, the LED strings 183-184 demand (*i.e.,* receive) the load current $I_{L3}$; and although feedback signal FB3 is shown as sampling load current $I_{L3}$ directly, other configurations are possible. For instance, load current $I_{L3}$ may be regulated by sampling the LED string currents $I_{L3A}$-$I_{L3B}$ instead of directly sampling load current $I_{L3}$; and LED string currents $I_{L3A}$-$I_{L3B}$ may be used by secondary controller 108 to regulate total load current $I_{L3}$.

In one embodiment, LED string currents $I_{L3A}$-$I_{L3B}$ may be used by secondary controller 108 to regulate output voltage $V_{O3}$ as means to control the total load current $I_{L3}$. Additionally, although the load circuit 106 is shown as having two LED strings 183, 184, other configurations having greater or fewer than two LED strings 183, 184 are possible.

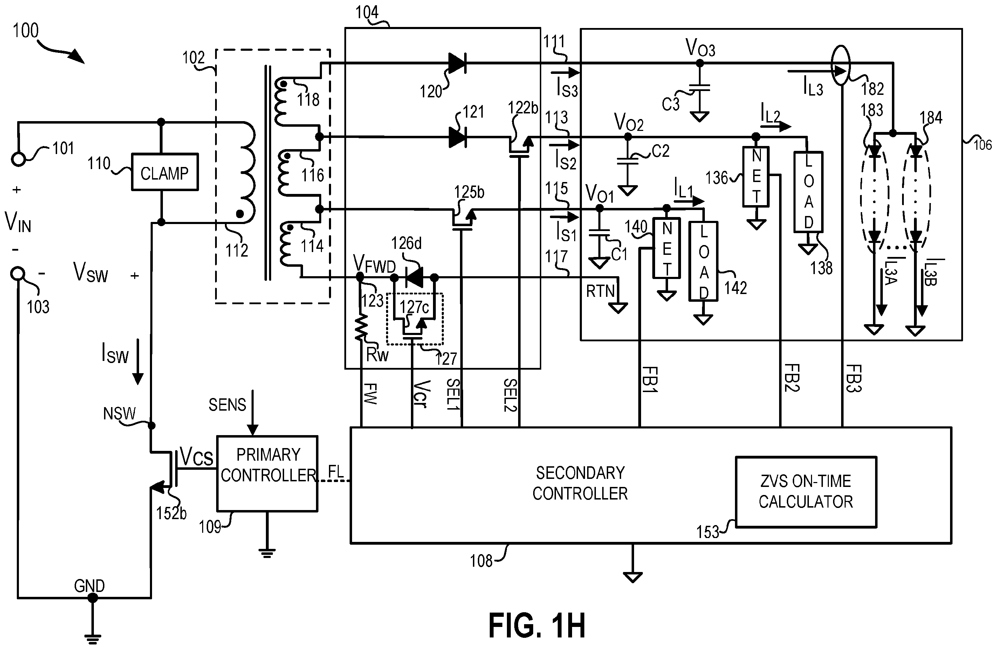

As discussed above, NFET 126 may be replaced with a diode 126d and a secondary switch 127 connected in parallel. For instance, **FIG. 1H** illustrates a multiple output power converter system 100 according to another embodiment of **FIG. 1G** and **FIG. 1D**. The embodiment of **FIG. 1H** is like the embodiment of **FIG. 1G**, except like **FIG. 1D,** NFET 126 may be replaced with a diode 126d and a secondary switch 127 connected in parallel. As illustrated, secondary switch 127 comprises an auxiliary NFET 127c.

Also, as one of ordinary skill in the art can appreciate, the embodiments of **FIG. 1A-1H** are non-limiting, and other configurations may be realized using integrated and/or discrete semiconductor components including bipolar junction transistors (BJTs), insulated gate bipolar transistors (IGBTs) and/or opposite polarity FETs (*e.g.*, P-channel FETs). Additionally, active devices may be realized using material processes based on silicon, silicon germanium, gallium nitride, and the like.

Although the multiple output power converter system 100 illustrates a switch-mode configuration (*e.g.*, a flyback configuration) for providing a plurality of select output voltages $V_{O1}$-$V_{O3}$ and secondary currents $I_{S1}$-$I_{S3}$, other configurations with greater or fewer outputs are possible. For instance, the teachings herein may also be applicable to forward converters and/or other converter topologies using transformers having multiple secondary outputs.

It is appreciated that, in the description and example drawings, the concept of multiple independently controlled CC/CV outputs has been illustrated mostly with series couplings of the secondary windings on the energy transfer element (e.g., transformer). However, it should not be considered as a limitation and it is appreciated that based on the application and the load power requirement on each of multiple outputs, the independently regulated CV/CC outputs may be arranged in any coupling combination of one or more series windings, parallel windings, or both series windings and parallel windings with a common return line for all of the independently controlled and regulated outputs in accordance with the teachings herein.

The proposed converter topology is one example of a single stage multiple output flyback converter targeting applications with multiple independently regulated constant voltage and/or constant current outputs. Example targets for such products may include monitor and television applications, which include a CC controlled output for the parallel strings (*e.g.*, arrays) of backlight LEDs requiring regulated adjustable (*e.g.*, dimming) constant current output with for example a 40-50V voltage drop plus one or more CV controlled outputs for powering logic, universal serial bus (USB), and audio that should satisfy a strict regulation accuracy requirement for each output.

**FIG. 2A** illustrates waveforms 202-205 during discontinuous mode (DCM) over a switching cycle of period T1 of an example power converter, for example, like that illustrated in any one of **FIGs. 1A-1H**. Waveform 202 may correspond to the forward pin voltage $V_{FWD}$ and/or the forward pin signal FW as a function of time. Waveform 203 may correspond with the switch voltage Vsw as function of time. Waveform 204 may correspond with primary control signal Vcs as a function of time; and waveform 205 may correspond with control signal Vcr as a function of time.

As depicted by waveform 204, the primary control signal Vcs driving a primary switch (*e.g.*, primary switch 152) may be periodic with period T1. For instance, as shown at time 211, the primary control signal Vcs may transition from high to low turning off the primary switch 152. At time 213 the primary control signal Vcs may transition from low to high turning on the primary switch 152; and at time 214 the control signal may again transition from high to low turning off the primary switch 152.

As depicted by waveform 205, the signal Vcr driving the SR (*e.g.*, NFET 126) gate may transition following the turn off transitions of the primary switch 152. For instance, as shown at time 211, the signal $V_{CR}$ may transition from low to high at time 211 and remain high until time 212. At time 212, the signal Vcr may transition from high to low and remain low until a new cycle begins at time 214.

As depicted by waveform 202 in relation to waveforms 204-205, the forward pin voltage $V_{FWD}$ at node 123 may vary periodically in accord with the switching transitions of the primary switch 152 and the SR (*e.g.*, NFET 126). For instance, from time 211 to time 212 the SR (NFET 126) may be conducting and the forward pin voltage $V_{FWD}$ may be less than and/or equal to zero volts (0V). Time 212 may delineate when energy from the secondary windings 114, 116, 118 and/or winding 99 becomes depleted to the extent that ringing may occur at node 123. For instance, as shown by waveform 202, there is ringing (*i.e.*, oscillation) between time 212 and time 213.

Also as shown, the ringing occurs with peaks (*i.e.*, excursions) above and below output voltage $V_{OUT}$. According to the teachings herein, the output voltage $V_{OUT}$ may correspond with output $V_{O1}$ of **FIG. 1A** and/or an output voltage $V_{O1}$-$V_{O3}$ of **FIG. 1E-1H**.

As depicted by waveform 203 in relation to waveforms 202, 204, 205, the switch voltage Vsw may also vary periodically in accord with the switching transitions of the primary switch 152 and the SR (*e.g.*, NFET 126). For instance, from time 211 to time 212 while the forward pin voltage $V_{FWD}$ is forced less than and/or equal to zero volts (0V), the switch voltage Vsw reaches a plateau and/or clamped voltage exceeding rectified ac line voltage $V_{IN}$. Additionally, after time 212 when energy from the secondary windings 114, 116, 118 and/or winding 99 becomes depleted, the switch node voltage Vsw may ring due, at least in part, to a capacitance (*e.g.*, a parasitic capacitance of the primary switch 152) and inductance (*e.g.*, an inductance of primary winding 112). In accord with switch mode power converter theory and as illustrated by waveforms 202, 203, the ringing of waveform 202 and of waveform 203 may be out of phase. The ringing may cease when the primary control signal Vcs turns the primary switch 152 on at time 213.

According to the teachings herein, information from the forward pin voltage $V_{FWD}$ may advantageously provide information about conditions on the primary side of the power converter without the need for additional communication from primary to secondary.

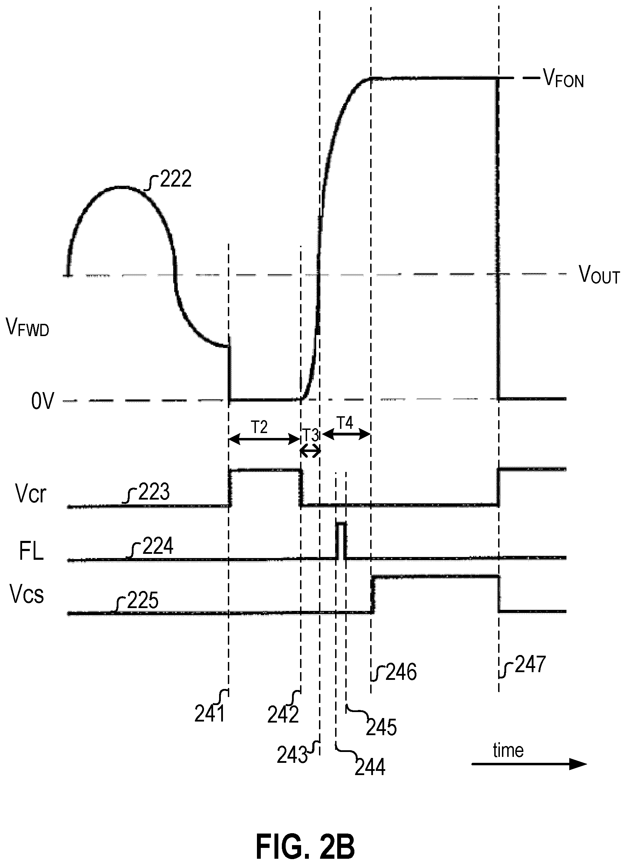

**FIG. 2B** illustrates waveforms 222-225 during a switching cycle of an example power converter according to the teachings herein. Waveform 222 may correspond to the forward pin voltage $V_{FWD}$ and/or the forward pin signal FW as a function of time. Waveform 223 may correspond with control signal Vcr as a function of time. Waveform 224 may correspond with signal FL transmitted by the secondary controller 108 as a request for energy; and waveform 225 may correspond with primary control signal Vcs as a function of time.

In contrast to waveform 204, waveform 223 shows a transition of Vcr from low to high at time 241 and a transition from high to low at time 242. According to the teachings herein, by turning the SR (*e.g.*, NFET 126) on during interval T2 (*i.e.,* from time 241 to time 242) the primary switch 152 may undergo ZVS; and as discussed herein, the duration of interval T2, also referred to as a hold time (*e.g.*, secondary switch hold time $T_{CHR\_ZVS}$), may be calculated using information available to the secondary controller 108.

As illustrated by waveforms 223-225, following interval T2, signal FL transitions from low to high at time 244 and then from high to low at time 245. Then in response to signal FL, the primary control signal Vcs may transition high to turn on the primary switch 152 at time 246. At time 247, the primary switch 152 turns off as the primary control signal Vcs transitions from high to low.

Relative to waveforms 223-225, waveform 222 illustrates how the forward pin voltage $V_{FWD}$ varies following interval T2. For instance, during interval T3 from time 242 to time 243, the forward pin voltage $V_{FWD}$ transitions from zero volts (0V) to a value determined by the output voltage Vout and/or by the select output voltage Vo. During interval T4 from time 243 to time 246, the forward pin voltage $V_{FWD}$ transitions from a value determined by the output voltage Vout and/or by the select output voltage Vo to a value $V_{FON}$. As illustrated, the value $V_{FON}$ may correspond with the value of the forward pin voltage $V_{FWD}$ and/or forward pin signal FW while the primary switch 152 is turned on.

Although waveform 222 illustrates the forward pin voltage $V_{FWD}$ as varying to a value $V_{FON}$, other variations are possible. For instance, as one of ordinary skill in the art may appreciate, in other configurations the forward pin voltage $V_{FWD}$ may not reach (*i.e.*, may not ring or transition to) the value $V_{FON}$.

As discussed herein, the duration of interval T2, also referred to a hold time T2, (*i.e.*, secondary switch hold time $T_{CHR\_ZVS}$) may be related to the value $V_{FON}$ and output voltage $V_{OUT}$ and/or select output voltage Vo. Accordingly, equation EQ. 7 may be recast by substituting the value $V_{FON}$, which may be a sampled value of the forward pin voltage

$V_{FWD}$.

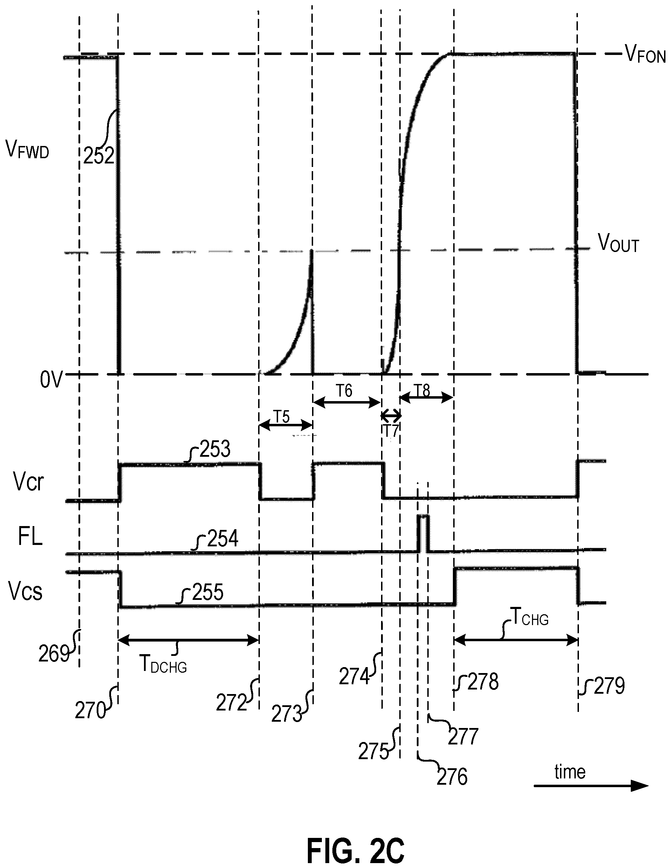

**FIG. 2C** illustrates waveforms 252-255 during a switching cycle from time 270 to time 279 according to an embodiment of the present disclosure. Waveform 252 may correspond to the forward pin voltage $V_{FWD}$ and/or the forward pin signal FW as a function of time. Waveform 253 may correspond with control signal Vcr as a function of time. Waveform 254 may correspond with signal FL transmitted by the secondary controller 108 as a request for energy at time 276; and waveform 255 may correspond with primary control signal Vcs as a function of time.

With reference to waveform 255, the switching cycle may be measured from time 270, when primary control signal Vcs transitions low, to time 279, when control signal Vcs again transitions low. Also, as illustrated by waveforms 254, during the switching cycle from time 270 to time 279, the signal FL sends a request for energy between time 276 and time 277.

As depicted by waveform 252 in relation to waveforms 253-255, the forward pin voltage $V_{FWD}$ at node 123 may vary periodically in accord with the switching transitions of the primary switch 152 and the SR switch (*e.g.*, NFET 126). For instance, from time 270 to time 272 the SR (NFET 126) may be conducting and the forward pin voltage $V_{FWD}$ may be less than and/or equal to zero volts (0V). Time 272 may delineate when energy from the secondary windings 114, 116, 118 and/or winding 99 becomes depleted to the extent that ringing may occur at node 123. For instance, as shown by waveform 252, there may be an initial onset of ringing (*i.e.*, oscillation) during interval T5 between time 272 and time 273.

According to the teachings herein, the SR switch (NFET 126) may be turned on at time 273. Also, according to the teachings herein, the output voltage $V_{OUT}$ may correspond with output $V_{O1}$ of **FIG. 1A** and/or an output voltage $V_{O1}$-$V_{O3}$ of **FIG. 1E-1H**.

As described herein, the control signal $V_{CR}$ may remain high during interval T6 (*i.e.,* from time 273 to time 274). The interval T6 may also be referred to as secondary switch hold time $T_{CHR\_ZVS}$. With reference to waveforms 252-255, the secondary switch hold time $T_{CHR\_ZVS}$ may be determined (*i.e.*, calculated) as a function of the forward pin voltage $V_{FWD}$ sampled at time 269 (*e.g.*, value $V_{FON}$).

Additionally, as explained above, the value $V_{FON}$ may correspond with the value of the forward pin voltage $V_{FWD}$ and/or forward pin signal FW while the primary switch 152 is turned on.

As discussed herein, the interval T6 (*e.g.*, secondary switch hold time $T_{CHR\_ZVS}$) may be further determined (*i.e.*, calculated) as a function of the output voltage $V_{OUT}$. According to the teachings herein, the output voltage $V_{OUT}$ may also be a select output voltage Vo readily available to the secondary controller 108. For instance, with reference to **FIG. 1H**, a select output voltage Vo may be provided to secondary controller 108 from any one of the feedback signals FB 1-FB3.

With reference to waveforms 253-255, waveform 252 also illustrates how the forward pin voltage $V_{FWD}$ varies following interval T6. For instance, during interval T7 from time 274 to time 275, the forward pin voltage $V_{FWD}$ transitions from zero volts (0V) to a value determined by the output voltage and/or by the select output voltage Vo. Subsequently, during interval T8 from time 275 to time 278, the forward pin voltage $V_{FWD}$ transitions from a value determined by the output voltage and/or by the select output voltage Vo to a value $V_{FON}$. According to the teachings herein, the interval T8 may be one quarter (*i.e.*, one fourth) of the idle ring period TIR as given by equation EQ. 9.

$$T8 \ = \ \frac{TIR}{4} = \ \frac{\pi}{2}\sqrt{CpriLpri} \qquad \text{EQ. 9}$$

Also, according to the teachings herein, equation EQ. 8 may also be reformulated into equation EQ. 10 in terms of the sampled value $V_{FON}$ and a select output voltage Vo.

$$T_{CHR\_ZVS} \ = \ \frac{TIR}{2\pi}\left(\frac{V_{FON}}{Vo} - 1\right) \qquad \text{EQ. 10}$$

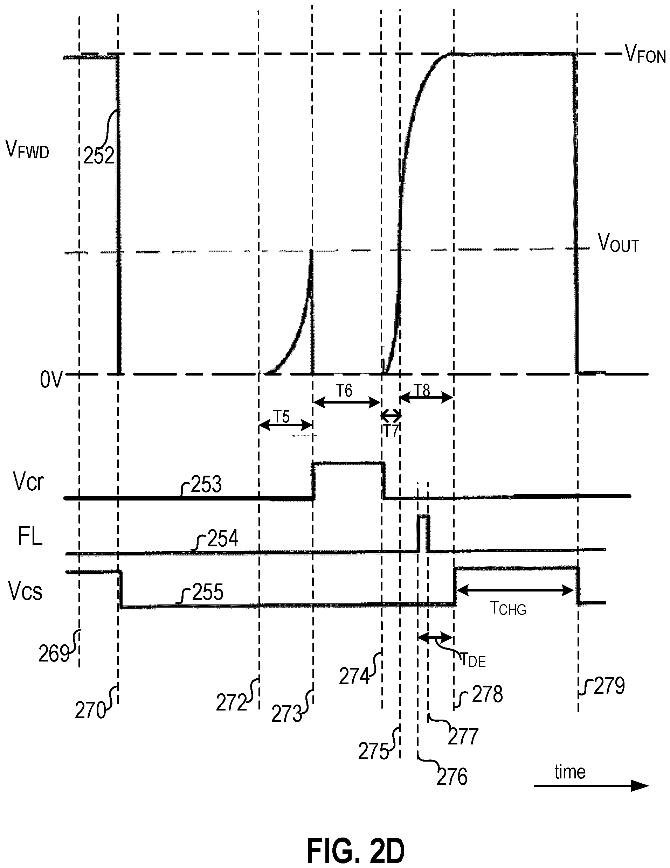

**FIG. 2D** illustrates waveforms 252-255 during a switching cycle from time 270 to time 279 according to another embodiment of the present disclosure. The embodiment of **FIG. 2D** may be like that of **FIG. 2C**, except waveform 253 does not transition high between time 270 and time 272 nor does it transition high at time 279. Instead, it only transitions high from time 273 to time 274 during interval T6.

For instance, waveform 253 of **FIG. 2D** may correspond with the power converter system 100 of **FIG. 1C** and/or **FIG. 1H** which uses NFET 127c; while the embodiment of **FIG. 2C** may correspond with the power converter system 100 of **FIG. 1A** which uses NFET 126.

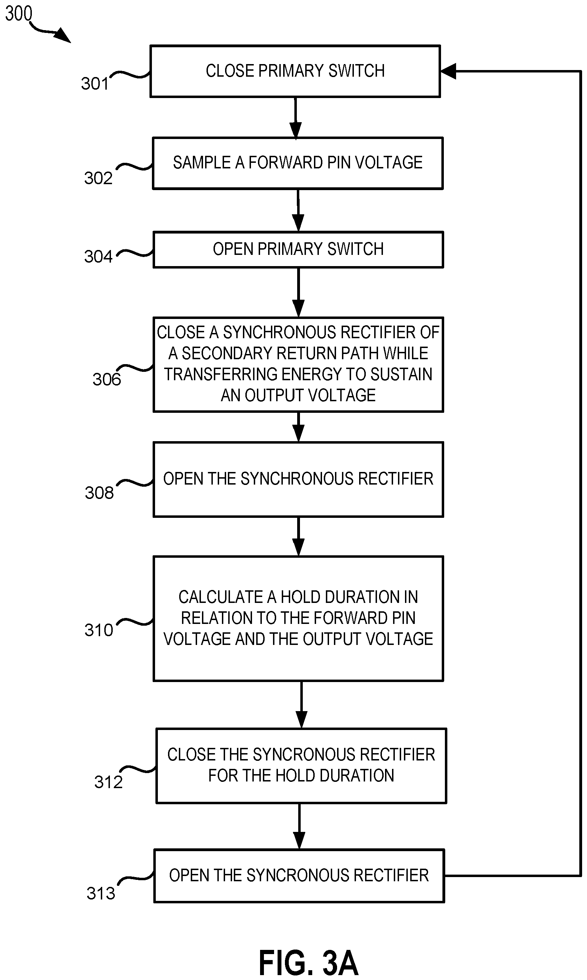

**FIG. 3A** illustrates a conceptual flow diagram 300 for zero voltage switching in a power converter system 100 according to an embodiment of the present disclosure.

Step 301 may correspond with closing (*i.e.*, turning on) the primary switch 152 at time 278.

Step 302 may correspond with sampling forward pin voltage $V_{FWD}$ at time 269. With reference to waveforms 252, the forward pin voltage $V_{FWD}$ at time 269 may provide the value $V_{FON}$ of the forward pin signal when the primary switch 152 is turned on (*i.e.*, conducting).

Step 304 may correspond with opening (*i.e.*, turning off) the primary switch at time 270.

Step 306 may correspond with closing the SR switch (*e.g.*, NFET 126) at time 270; and step 308 may correspond with opening the SR switch (*e.g.*, NFET 126) at time 272.

Step 310 may correspond with calculating the SR hold duration T6 (*e.g.*, calculating interval T6). The SR hold duration T6 may be given by the secondary switch hold time $T_{CHR\_ZVS}$ as derived herein.

Step 312 may correspond with closing the synchronous rectifier for the hold duration T6. For instance, step 312 may correspond with closing the SR switch (*e.g.*, NFET 126) over the interval T6 (*i.e.,* hold duration T6) from time 273 to time 274.

Step 313 may correspond with opening the synchronous rectifier following the hold duration T6 and prior to time 278.

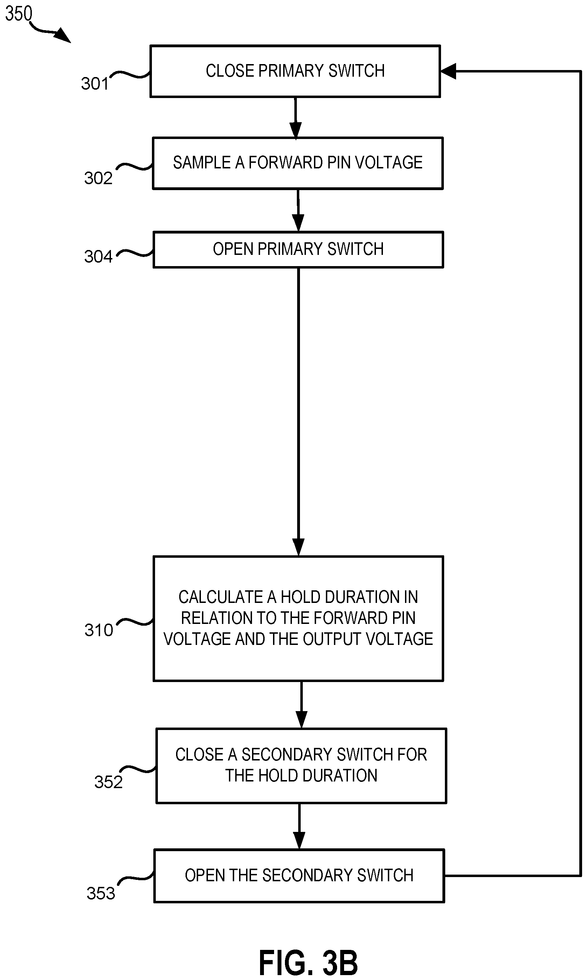

FIG. 3B illustrates a conceptual flow diagram 350 for zero voltage switching in a power converter system 100 according to another embodiment of the present disclosure. Conceptual flow diagram 350 is like conceptual flow diagram 300 except it excludes steps 306-308; and steps 312-313 are replaced with steps 352-353, respectively.

Step 352 may correspond with closing a secondary switch (*e.g.*, NFET 127c) for the hold duration T6. Step 352 may correspond with opening the secondary switch (*e.g.*, NFET 127c) following the hold duration T6 and prior to time 278.

*Dynamic Operation During A Switching Cycle*

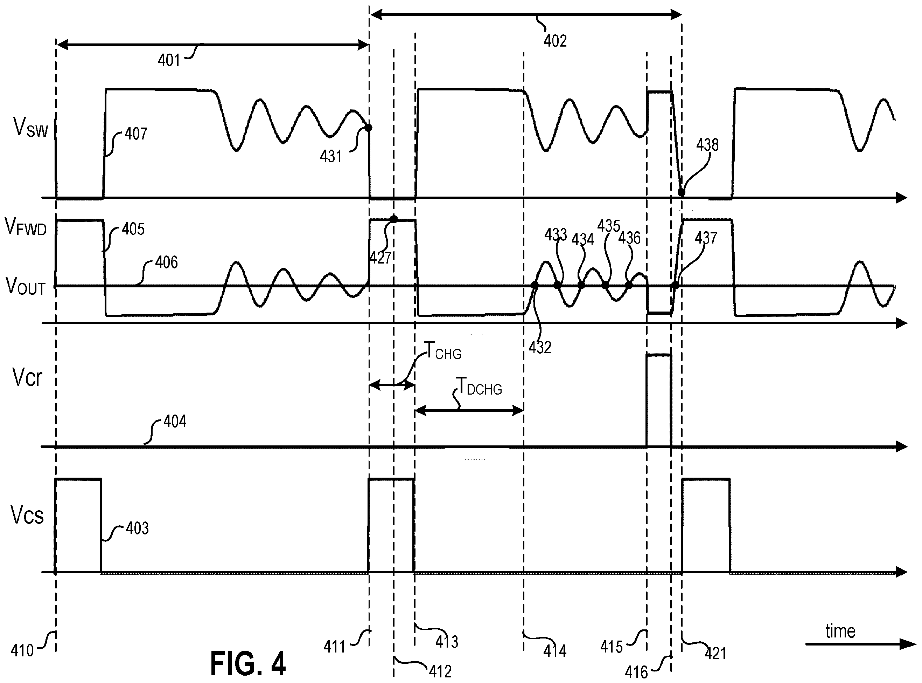

**FIG. 4** compares waveforms 403-407 during two switching cycles 401-402 of a primary switch 152. For comparison during switching cycle 401, the control signal Vcr may be disabled; while during switching cycle 402, the control signal Vcr may be enabled.

Waveform 405 may correspond to the forward pin voltage $V_{FWD}$ and/or the forward pin signal FW as a function of time. Waveform 407 may correspond with the switch voltage Vsw as function of time. Waveform 403 may correspond with primary control signal Vcs as a function of time; and waveform 404 may correspond with control signal Vcr as a function of time. Additionally, waveform 406 may correspond with output voltage $V_{OUT}$ (*e.g.* output voltage $V_{O1}$ of **FIG. 1D**).

The primary switch 152 may operate in the "on" state in response to the primary control signal Vcs. As illustrated in **FIG. 4**, the primary switch 152 closes (*i.e.*, turns "on") at times 410, 411, and 421. Switching cycle 401 (*i.e.,* switching period 401) is delineated from time 410 to time 411, while switching period 402 is delineated from time 411 to time 421. As discussed above, switching cycle 402 may correspond with that of primary switch 152 in the embodiment of **FIG. 1D**.

At time 412, the sample and hold circuit 161 may sample the forward pin signal FW and/or the forward pin voltage $V_{FWD}$. For instance, the sample and hold circuit 161 may sample the forward pin voltage $V_{FWD}$ at point 427 on waveform 405. Accordingly, the ADC 162 may, in turn, provide the digital forward pin signal DFW as a digital representation of waveform 405 at time 412 (*e.g.,* value $V_{FON}$).

At time 413, the primary switch 152 may open (*i.e.,* turn "off"). From time 413 to time 414, the diode 126d may conduct according to the embodiment of **FIG. 1D**. Accordingly, waveform 404 (*i.e.*, control signal Vcr) remains low from time 413 to time 414. However, as one of ordinary skill in the art may appreciate, in other embodiments (*e.g.*, the embodiment of **FIG. 1A),** waveform 404 (*i.e.,* control signal Vcr) may transition high at time 413 and subsequently transition low at time 414 to drive the gate of NFET 126.

At time 414, power converter system 100 may enter discontinuous conduction mode (DCM). Accordingly, waveform 405 and waveform 407 exhibit ringing. Comparator 155 may be used to distinguish the points 432-436 where waveform 405 (*i.e.*, forward pin voltage $V_{FWD}$ and/or forward pin signal FW) intersects (*i.e.,* crosses) waveform 406 (*i.e.,* output voltage $V_{OUT}$). With reference to **FIG. 1D**, the comparator output signal L1 may therefore vary (*i.e.,* transition) according to the ringing of waveform 405; in turn, the idle ring period calculator 156 may calculate the idle ring period TIR according to the transitions of the comparator output signal L1. Moreover, the edge detection blocks 157-158 may trigger according to transition edges of the comparator output signal L1.

During switching cycle 402, the ZVS on-time calculator 153 may dynamically calculate a hold time (*e.g.*, secondary switch hold time $T_{CHR\_ZVS}$) as a function of the idle ring period TIR, the digital forward pin signal DFW, and the digital output voltage signal DVO. As illustrated in **FIG. 1D**, the hold time may be provided via the ZVS calculator signal L4; and, in response to AND gate 165, waveform 404 (*i.e.,* control signal Vcr) transitions high at time 415 and transitions low at time 416. According to the teachings herein, the time duration from time 415 to time 416 may be determined, at least in part, by the ZVS on-time calculator 153.

Additionally, the comparator output signal L1 may also transition at the point 437 where waveform 405 (*i.e.,* forward pin voltage $V_{FWD}$ and/or forward pin signal FW) intersects (*i.e.,* crosses) waveform 406 (*i.e.,* output voltage $V_{OUT}$). Subsequently, the delay block 159 may transition so that at time 421 the primary control signal Vcs (*i.e.*, waveform 403) turns on the primary switch 152. The delay from the point 437 to time 421 where the primary switch 152 turns on may be referred to as an "open ring duration."

According to the teachings herein, the open ring duration may be a quarter of the idle ring period TIR. For instance, with reference to **FIG. 1D**, the delay block 160 may provide delay output signal L3 after one quarter of an idle ring period TIR has elapsed. This, in turn, may cause a delay of one quarter the idle ring period TIR such that the duration from time 416 to time 421 is substantially equal to one quarter of the idle ring period TIR.

When the control signal Vcr is enabled during switching cycle 402, the switching is relatively "soft" (*i.e.*, improved) at time 421. As illustrated by waveform 407, at time 421 the switch voltage Vsw reaches nearly zero volts at point 438. In comparison, at time 411 following switching cycle 401, the switch voltage Vsw transitions from a point 431 having a relatively higher voltage than the point 438.

*Using Charge And Discharge Time Intervals To Calculate Hold Time*

As described herein, the ZVS on-time calculator 153 may dynamically calculate a secondary switch hold time $T_{CHR\_ZVS}$ using sampled values of the forward pin voltage $V_{FWD}$ and the output voltage Vout. However, there may be applications (*e.g.*, some single output flyback converter applications) where sampling voltages becomes undesirable due to bandwidth limitations. Therefore, other methods and ZVS on-time calculators are disclosed to meet these challenges.

A ZVS on-time calculator for estimating a secondary switch hold time $T_{CHR\_ZVS}$ based, in part, upon a ratio of discharge time $T_{DCHG}$ to a charge time $T_{CHG}$ is presented herein. The charge time $T_{CHG}$ and discharge time $T_{DCHG}$ may be advantageously determined using timers (*e.g.*, digital timers) thereby overcoming potential bandwidth limitations associated with voltage sampling. As illustrated in **FIG. 2C, FIG. 2D,** and **FIG. 4**, the charge time $T_{CHG}$ may correspond with a time interval during which the primary switch 152 is on; and the discharge time $T_{DCHG}$ may correspond with a time interval during which the secondary switch (*e.g.*, NFET 126) is on.

In the steady state, the charge time $T_{CHG}$ may be given by EQ. 11 and discharge time $T_{DCHG}$ may be given by equation EQ. 12.

$$T_{CHG} = \frac{Ipk \cdot Lpri}{V_{IN}} \qquad \text{EQ. 11}$$

$$T_{DCHG} = \frac{Ipk \cdot Lpri}{Vor} \qquad \text{EQ. 12}$$

As one skilled in the art may appreciate, equations EQ. 11-12 may be predicated on volt-second balance equations which hold during steady state conditions. Accordingly, EQ. 4 for the switch hold time $T_{CHR\_ZVS}$ may be conveniently recast by EQ. 13 in the steady state.

$$T_{CHR\_ZVS} = \frac{T_{DCHG}}{T_{CHG}} \frac{TIR}{2\pi} \qquad \text{EQ. 13}$$

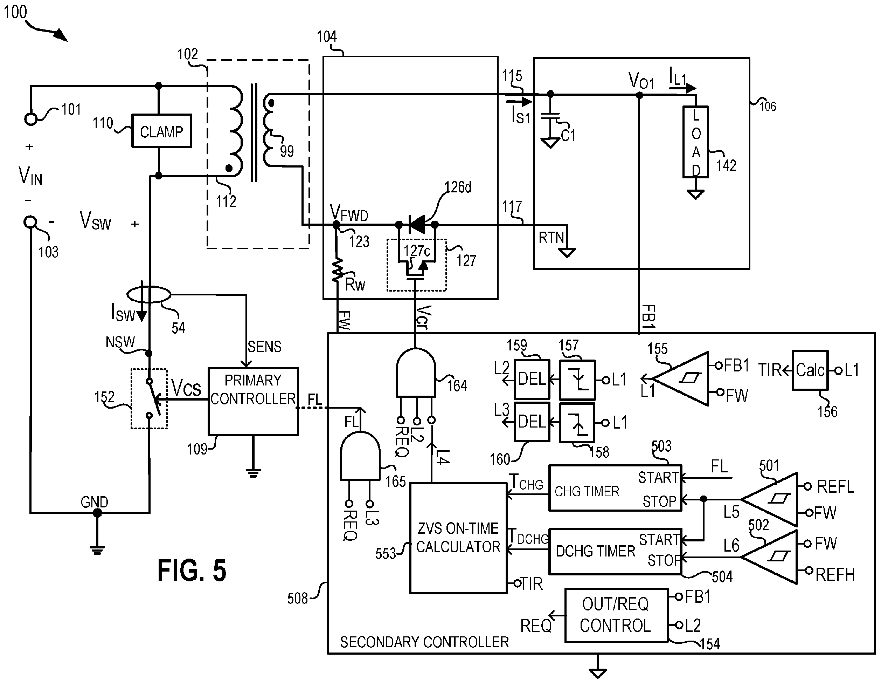

**FIG. 5** illustrates a power converter system 100 according to an embodiment of the present disclosure including secondary controller 508. Unlike secondary controller 108, secondary controller 508 includes ZVS calculator 553, charge timer 503, discharge timer 504, comparator 501, and comparator 502. Charge timer 503 and discharge timer 504 may be realized as digital timers and/or analog timers.

Additionally, unlike ZVS calculator 153, ZVS calculator 553 receives a value (*e.g.,* a digital representation) of the charge time $T_{CHG}$ and a value (*e.g.,* a digital representation) of the discharge time $T_{DCHG}$. Accordingly, unlike ZVS calculator 153, ZVS calculator 553 may assert ZVS calculator signal L4 based, at least in part, upon equation EQ. 13.

As discussed above, EQ. 13 may be predicated upon steady state conditions. Therefore, the ZVS calculator 553 may filter the result of the charge time $T_{CHG}$ and discharge time $T_{DCHG}$ over several switching cycles of the primary switch 152. This may advantageously mitigate any error due to transient conditions such as load step transitions and/or continuous conduction mode (CCM) to discontinuous mode (DCM) transitions.

As illustrated, ZVS calculator 553 may receive charge time $T_{CHG}$ from charge timer 503 and discharge time $T_{DCHG}$ from discharge timer 504. Charge timer 503 receives signal FL at a start input and a comparator output signal L5 at a stop input. Comparator 501 may provide comparator output signal L5 based on a comparison of a secondary winding voltage (*i.e.,* forward pin signal FW) and a low reference voltage REFL (*e.g.*, zero volts relative to secondary ground RTN). Accordingly, charge timer 503 may start timing in response to signal FL being exerted by AND gate 165 and stop timing when the forward pin signal FW transitions low.

Therefore, as illustrated by the waveforms of **FIG. 2D**, charge timer 503 may begin timing after time 276 and stop timing at time 279. When the delay time $T_{DE}$ (*e.g.*, five to ten nanoseconds) is small relative to the total charge time $T_{CHG}$, then any error introduced by initiating charge timer 503 concurrently with signal FL may be negligible.

Discharge timer 504 receives comparator output signal L5 at a start input and a comparator output signal L6 at a stop input. Comparator 502 may provide comparator output signal L6 based on a comparison of a secondary winding voltage (*i.e.*, forward pin signal FW) and a high reference voltage REFH (*e.g.*, one volt relative to secondary ground RTN). Accordingly, discharge timer 504 may start timing when the forward pin signal FW transitions from high to low and stop timing when the forward pin signal FW transitions from low to high.

Therefore, as illustrated by the waveforms in **FIG. 4**, discharge timer 504 may begin timing at time 413 and stop timing at time 414.

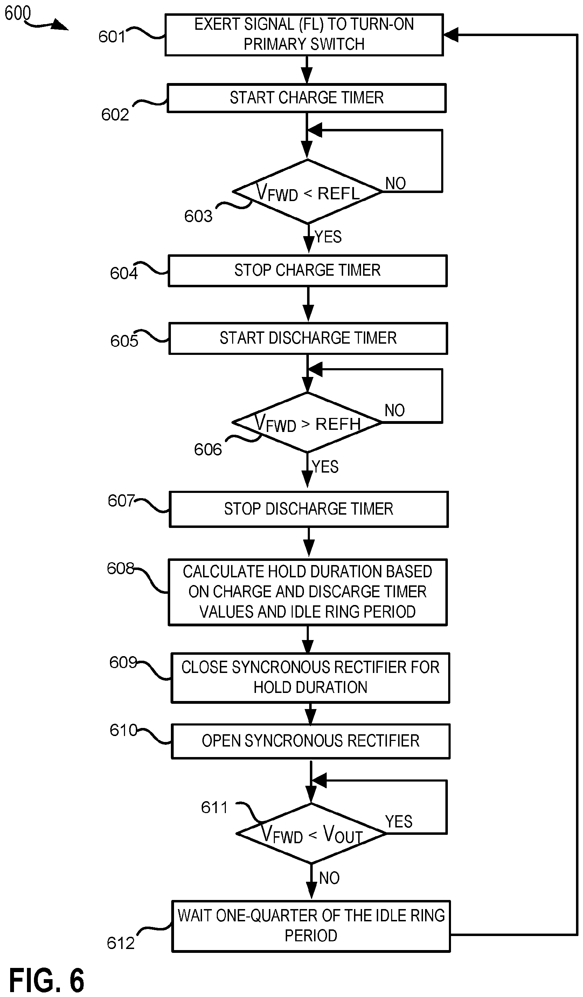

**FIG. 6** illustrates a conceptual flow diagram 600 for zero voltage switching in a power converter system 100 according to the embodiment of **FIG. 5.**

Step 601 may correspond with exerting signal FL to turn on the primary switch 152.

Step 602 may correspond with starting the charge timer 503. For instance, AND gate 165 may exert signal FL high at the start input of charge timer 503.

With reference to **FIG. 4**, decision step 603 may correspond with the operation of charge timer 503 prior to waveform 405 transitioning low (*e.g.*, prior to time 413). As discussed above with respect to **FIG. 5**, decision step 603 may be implemented with comparator 501 which provides comparator output signal L5 based on a comparison of a secondary winding voltage (*i.e.*, forward pin signal FW) and a low reference voltage REFL (*e.g.,* zero volts relative to secondary ground RTN).

When the primary control signal Vcs is exerted low and primary switch turns off, the charge timer 503 may stop timing; accordingly, the conceptual flow diagram 600 may flow to the next step 604 corresponding with stopping the charge timer 503 with comparator output signal L5.

Step 605 may correspond with starting the discharge timer 504 with comparator output signal L5.

With reference to **FIG. 4**, decision step 606 may correspond with the operation of discharge timer 504 prior to waveform 405 transitioning high (*e.g.*, prior to time 414). As discussed above with respect to **FIG. 5**, decision step 606 may be implemented with comparator 502 which provides comparator output signal L6 based on a comparison of a secondary winding voltage (*i.e.*, forward pin signal FW) and a high reference voltage REFH (*e.g.,* one volt relative to secondary ground RTN).

Accordingly, at time 414 the conceptual flow diagram 600 may flow to the next step 607 corresponding with stopping the discharge timer 504 with comparator output signal L6.

Step 608 may correspond with using the ZVS calculator 553 to estimate a secondary switch hold time $T_{CHR\_ZVS}$ using EQ. 13.

Step 609 may correspond with closing a synchronous rectifier/secondary switch (*e.g.*, NFET 127c).

Step 610 may correspond with opening a synchronous rectifier/secondary switch (*e.g.,* NFET 127c) after holding synchronous rectifier/secondary switch (*e.g.*, NFET 127c) on for a duration given by the secondary switch hold time $T_{CHR\_ZVS}$.

Decision step 611 may correspond with the operation prior to subsequently turning on the primary switch 152. Once the secondary signal (*i.e.*, forward pin signal FW) reaches a value substantially equal to the output voltage $V_{OUT}$, then the conceptual flow diagram 600 may proceed to step 612 corresponding with waiting one quarter of the idle ring period TIR.

CONCLUSION

In the above description, numerous specific details are set forth in order to provide a thorough understanding of controlling a secondary switch to achieve zero voltage switching. It will be apparent, however, to one having ordinary skill in the art that the specific detail need not be employed to practice the teachings herein. In other instances, well-known materials or methods have not been described in detail in order to avoid obscuring the present disclosure.

Reference throughout this specification to "one embodiment", "an embodiment", "one example" or "an example" means that a particular feature, structure or characteristic described in connection with the embodiment or example is included in at least one embodiment of a (multiple output) switch-mode power converter system. Thus, appearances of the phrases "in one embodiment", "in an embodiment", "one example" or "an example" in various places throughout this specification are not necessarily all referring to the same embodiment or example. Furthermore, the particular features, structures or characteristics may be combined in any suitable combinations and/or subcombinations in one or more embodiments or examples. Particular features, structures or characteristics may be included in an integrated circuit, an electronic circuit, a logic circuit, or other suitable components that provide the described functionality. In addition, it is appreciated that the figures provided herewith are for explanation purposes to persons ordinarily skilled in the art and that the drawings are not necessarily drawn to scale.

The above description of illustrated examples of the present disclosure, including what is described in the Abstract, are not intended to be exhaustive or to be limited to the precise forms disclosed. While specific embodiments of and examples for controlling a secondary switch to achieve zero voltage switching are described herein for illustrative purposes, various equivalent modifications are possible without departing from the broader spirit and scope of the present disclosure. Indeed, it is appreciated that the specific example voltages, currents, frequencies, power range values, times, etc., are provided for explanation purposes and that other values may also be employed in other embodiments and examples in accordance with the teachings herein.

The foregoing description may refer to elements or features as being "connected," "electrically connected," and/or "coupled" together. As used herein, unless expressly stated otherwise, "connected" means that one element/-feature is directly or indirectly connected to another element/feature, and not necessarily mechanically. Likewise, unless expressly stated otherwise, "coupled" means that one element/feature is directly or indirectly coupled to another element/feature, and not necessarily mechanically. Thus, although the various schematics shown in the figures depict example arrangements of elements and components, additional intervening elements, devices, features, or components may be present in an actual embodiment (assuming that the functionality of the depicted circuits is not adversely affected).

Moreover, conditional language used herein, such as, among others, "can," "could," "might," "may," "e.g.," "for example," "such as" and the like, unless specifically stated otherwise or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding whether these features, elements and/or states are included or are to be performed in any particular embodiment.

While certain embodiments have been described, these embodiments have been presented by way of example only and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while the disclosed embodiments are presented in a given arrangement, alternative embodiments may perform similar functionalities with different components and/or circuit topologies, and some elements may be deleted, moved, added, subdivided, combined, and/or modified. Each of these elements may be implemented in a variety of different ways. Any suitable combination of the elements and acts of the various embodiments described above can be combined to provide further embodiments. Accordingly, the scope of the present invention is defined only by reference to the appended claims.

Although the claims presented here are in single dependency format for filing at the USPTO, it is to be understood that any claim may depend on any preceding claim of the same type except when that is clearly not technically feasible.

EMBODIMENTS

Although the present invention is defined in the attached claims, it should be understood that the present invention can also (alternatively) be defined in accordance with the following embodiments:

Embodiments - Set 1:

1. A method of dynamically switching during a switching cycle of a primary switch in a power converter, the method comprising:

closing a primary switch;
measuring a charge time while the primary switch is on;
opening the primary switch;
closing a secondary switch;
measuring a discharge time while the secondary switch is on;
opening the secondary switch;
determining an idle ring period;
calculating a hold duration in relation to the charge time, the discharge time, and the idle ring period; and
closing the secondary switch for the hold duration.

2. The method of embodiment 1, wherein the secondary switch is a synchronous rectifier.
3. The method of embodiment 1, wherein the secondary switch is an auxiliary N-channel field effect transistor (NFET).
4. The method of embodiment 1, wherein the secondary switch is an auxiliary bipolar junction transistor (BJT).

5. The method of embodiment 1, wherein the power converter is a flyback converter.

6. The method of embodiment 1, further comprising:
determining the idle ring period using a comparator.

7. The method of embodiment 1, further comprising:

determining an open ring duration in relation to the idle ring period; and
completing the switching cycle after the open ring duration.

8. The method of embodiment 7, wherein the open ring duration is substantially equal to one fourth of the idle ring period.

9. The method of embodiment 1, wherein closing the primary switch comprises:
closing the primary switch in response to a signal sent from a secondary controller to a primary controller.

10. The method of embodiment 9, wherein measuring the charge time while the primary switch is on comprises:

measuring the charge time using a charge timer; and
initiating the charge timer in response to the signal sent from the secondary controller to the primary controller.

11. The method of embodiment 1, wherein measuring the discharge time while the secondary switch is on comprises:
measuring the discharge time using a discharge timer.

12. The method of embodiment 1, wherein calculating the hold duration in relation to the charge time, the discharge time, and the idle ring period further comprises:
calculating the hold duration in relation to a moving average of a ratio of the discharge time and the charge time.

13. A method of dynamically switching during a switching cycle of a primary switch in a power converter, the method comprising:

closing a primary switch;
measuring a charge time while the primary switch is on;
opening the primary switch;
measuring a discharge time of current flowing in a secondary winding;
determining an idle ring period;
calculating a hold duration in relation to the charge time, the discharge time, and the idle ring period; and
closing a secondary switch for the hold duration.

14. The method of embodiment 13, wherein the secondary switch is a synchronous rectifier.

15. The method of embodiment 13, wherein the secondary switch is an auxiliary N-channel field effect transistor (NFET).

16. The method of embodiment 13, wherein the secondary switch is an auxiliary bipolar junction transistor (BJT).

17. The method of embodiment 13, further comprising:
determining the idle ring period using a comparator.

18. The method of embodiment 13, further comprising:

determining an open ring duration in relation to the idle ring period; and
completing the switching cycle after the open ring duration.

19. The method of embodiment 18, wherein the open ring duration is substantially equal to one fourth of the idle ring period.

20. The method of embodiment 13, wherein closing the primary switch comprises:
closing the primary switch in response to a signal sent from a secondary controller to a primary controller.

21. The method of embodiment 20, wherein measuring the charge time while the primary switch is on comprises:

measuring the charge time using a charge timer; and
initiating the charge timer in response to the signal sent from the secondary controller to the primary controller.

22. The method of embodiment 13, wherein measuring the discharge time comprises:
measuring the discharge time using a discharge timer.

23. The method of embodiment 13, wherein calculating the hold duration in relation to the charge time, the discharge time, and the idle ring period further comprises:
calculating the hold duration in relation to a moving average of a ratio of the discharge time and the charge time.

24. A flyback converter comprising:

an energy transfer element comprising a primary winding configured to receive energy from a first power supply and a secondary winding;
a primary switch electrically coupled to the primary winding and configured to conduct during a charge time of a switching cycle;
a secondary switch electrically coupled to the secondary winding and configured to close for a discharge time of the switching cycle and subsequently for a hold duration; and
a secondary controller comprising a zero voltage switching (ZVS) calculator configured to calculate the hold duration based, at least in part, upon an idle ring period, the charge time, and the discharge time.

25. The flyback converter of embodiment 24, wherein the idle ring period depends, at least in part, upon a primary capacitance and a primary inductance.
26. The flyback converter of embodiment 24, wherein ZVS calculator is configured to calculate the hold duration based upon a ratio of the discharge time to the charge time.
27. The flyback converter of embodiment 24, wherein the ZVS calculator is configured to calculate the hold duration based upon a moving average of a ratio of the discharge time and the charge time.
28. The flyback converter of embodiment 24, wherein the secondary controller comprises:

a charge timer configured to measure the charge time; and
a discharge timer configured to measure the discharge time.

29. The flyback converter of embodiment 28, wherein the charge timer is configured to start timing in response to a request for energy sent from the secondary controller to a primary controller.
30. The flyback converter of embodiment 28, wherein the charge timer is configured to stop timing in response to a charge stop signal, the charge stop signal indicative of a comparison of a secondary winding voltage to a low reference voltage.
31. The flyback converter of embodiment 30, wherein the low reference voltage is substantially zero volts relative to a secondary ground.
32. The flyback converter of embodiment 30, wherein the discharge timer is configured to start timing in response to the charge stop signal.
33. The flyback converter of embodiment 32, wherein the discharge timer is configured to stop timing in response to a discharge stop signal, the discharge stop signal indicative of a comparison of a secondary winding voltage to a high reference voltage having a value greater than the low reference voltage.
34. A flyback converter comprising:

an energy transfer element comprising a primary winding configured to receive energy from a first power supply and a secondary winding;
a primary switch electrically coupled to the primary winding and configured to conduct during a charge time of a switching cycle;
wherein the secondary winding is configured to conduct charge during a discharge time of the switching cycle;
a secondary switch electrically coupled to the secondary winding and configured to close for a hold duration; and
a secondary controller comprising a zero voltage switching (ZVS) calculator configured to calculate the hold duration based, at least in part, upon an idle ring period, the charge time, and the discharge time.

35. The flyback converter of embodiment 34, wherein the idle ring period depends, at least in part, upon a primary capacitance and a primary inductance.
36. The flyback converter of embodiment 34, wherein ZVS calculator is configured to calculate the hold duration based upon a ratio of the discharge time to the charge time.
37. The flyback converter of embodiment 34, wherein the ZVS calculator is configured to calculate the hold duration based upon a moving average of a ratio of the discharge time and the charge time.
38. The flyback converter of embodiment 34, wherein the secondary controller comprises:

a charge timer configured to measure the charge time; and
a discharge timer configured to measure the discharge time.

39. The flyback converter of embodiment 38, wherein the charge timer is configured to stop timing in response to a charge stop signal, the charge stop signal indicative of a comparison of a secondary winding voltage to a low reference voltage.

40. The flyback converter of embodiment 39, wherein the discharge timer is configured to start timing in response to the charge stop signal.

41. The flyback converter of embodiment 40, wherein the discharge timer is configured to stop timing in response to a discharge stop signal, the discharge stop signal indicative of a comparison of a secondary winding voltage to a high reference voltage having a value greater than the low reference voltage.

Embodiments - Set 2:

1. A method of dynamically switching during a switching cycle of a primary switch in a power converter, the method comprising:

closing a primary switch;
measuring a charge time while the primary switch is on;
opening the primary switch;
closing a secondary switch;
measuring a discharge time while the secondary switch is on;
opening the secondary switch;
determining an idle ring period;
calculating a hold duration in relation to the charge time, the discharge time, and the idle ring period; and
closing the secondary switch for the hold duration.

2. The method of embodiment 1, wherein the secondary switch is a synchronous rectifier.

3. The method of embodiment 1, wherein the secondary switch is an auxiliary N-channel field effect transistor (NFET).

4. The method of embodiment 1, wherein the secondary switch is an auxiliary bipolar junction transistor (BJT).

5. The method of embodiment 1, wherein the power converter is a flyback converter.

6. The method of embodiment 1, further comprising:
determining the idle ring period using a comparator.

7. The method of embodiment 1, further comprising:

determining an open ring duration in relation to the idle ring period; and
completing the switching cycle after the open ring duration.

8. The method of embodiment 7, wherein the open ring duration is substantially equal to one fourth of the idle ring period.

9. The method of embodiment 1, wherein closing the primary switch comprises:
closing the primary switch by exerting a signal from a secondary controller to a primary controller.

10. The method of embodiment 9, wherein measuring the charge time while the primary switch is on comprises:

measuring the charge time using a charge timer; and
initiating the charge timer with the signal from the secondary controller to the primary controller.

11. The method of embodiment 1, wherein measuring the discharge time while the secondary switch is on comprises:
measuring the discharge time using a discharge timer.

12. The method of embodiment 1, wherein calculating the hold duration in relation to the charge time, the discharge time, and the idle ring period further comprises:
calculating the hold duration in relation to a moving average of a ratio of the discharge time and the charge time.

13. A flyback converter comprising:

an energy transfer element comprising a primary winding configured to receive energy from a first power supply and a secondary winding;
a primary switch electrically coupled to the primary winding and configured to conduct during a charge time of a switching cycle;
a secondary switch electrically coupled to the secondary winding and configured to close for a discharge time of the switching cycle and subsequently for a hold duration; and
a secondary controller comprising a zero voltage switching (ZVS) calculator configured to calculate the hold duration based, at least in part, upon an idle ring period, a charge time, and a discharge time.

14. The flyback converter of embodiment 13, wherein the idle ring period depends, at least in part, upon a primary capacitance and a primary inductance.

15. The flyback converter of embodiment 13, wherein ZVS calculator is configured to calculate the hold duration based upon a ratio of the discharge time to the charge time.

16. The flyback converter of embodiment 13, wherein the ZVS calculator is configured to calculate the hold duration based upon a moving average of a ratio of the discharge time and the charge time.

17. The flyback converter of embodiment 13, wherein the secondary controller comprises:

a charge timer configured to measure the charge time; and
a discharge timer configured to measure the discharge time.

18. The flyback converter of embodiment 17, wherein the charge timer is configured to start timing in response to a request for energy from the secondary controller.

19. The flyback converter of embodiment 17, wherein the charge timer is configured to stop timing in response to a charge stop signal, the charge stop signal indicative of a comparison of a secondary winding voltage to a low reference voltage.

20. The flyback converter of embodiment 19, wherein the low reference voltage is substantially zero volts relative to a secondary ground.

21. The flyback converter of embodiment 19, wherein the discharge timer is configured to start timing in response to the charge stop signal.

22. The flyback converter of embodiment 21, wherein the discharge timer is configured to stop timing in response to a discharge stop signal, the discharge stop signal indicative of a comparison of a secondary winding voltage to a high reference voltage having a value greater than the low reference voltage.

**Claims**

1. A method of dynamically switching during a switching cycle of a primary switch in a power converter, the method comprising:

closing a primary switch;
measuring a charge time while the primary switch is on;
opening the primary switch;
measuring a discharge time of current flowing in a secondary winding;
determining an idle ring period;
calculating a hold duration in relation to the charge time, the discharge time, and the idle ring period; and
closing a secondary switch for the hold duration.

2. The method of claim 1, wherein, to measure the discharge time while the secondary switch is on, the method further comprises:

closing the secondary switch; and
opening the secondary switch.

3. The method of claim 1 or claim 2, wherein either:

the secondary switch is a synchronous rectifier; or
the secondary switch is either an auxiliary N-channel field effect transistor (NFET) or an auxiliary bipolar junction transistor (BJT).

4. The method of claim 1 or claim 2, wherein the power converter is a flyback converter.

5. The method of claim 1 or claim 2, further comprising:
determining the idle ring period using a comparator.

6. The method of claim 1 or claim 2, further comprising:

determining an open ring duration in relation to the idle ring period; and
completing the switching cycle after the open ring duration, and
optionally wherein the open ring duration is substantially equal to one fourth of the idle ring period.

7. The method of claim 1 or claim 2, wherein closing the primary switch comprises:
closing the primary switch in response to a signal sent from a secondary controller to a primary controller.

8. The method of claim 7 or claim 2, wherein measuring the charge time while the primary switch is on comprises:

measuring the charge time using a charge timer; and
initiating the charge timer in response to the signal sent from the secondary controller to the primary controller.

9. The method of claim 1 or claim 2, wherein measuring the discharge time while the secondary switch is on comprises:
measuring the discharge time using a discharge timer.

10. The method of claim 1 or claim 2, wherein calculating the hold duration in relation to the charge time, the discharge time, and the idle ring period further comprises:
calculating the hold duration in relation to a moving average of a ratio of the discharge time and the charge time.

11. A flyback converter comprising:

an energy transfer element comprising a primary winding configured to receive energy from a first power supply and a secondary winding;
a primary switch electrically coupled to the primary winding and configured to conduct during a charge time of a switching cycle;
a secondary switch electrically coupled to the secondary winding and configured to close for a discharge time of the switching cycle and subsequently for a hold duration; and
a secondary controller comprising a zero voltage switching (ZVS) calculator configured to calculate the hold duration based, at least in part, upon an idle ring period, the charge time, and the discharge time.

12. The flyback converter of claim 11, wherein the idle ring period depends, at least in part, upon a primary capacitance and a primary inductance.

13. The flyback converter of claim 11, wherein ZVS calculator is configured to calculate the hold duration based upon either

a ratio of the discharge time to the charge time or
a moving average of a ratio of the discharge time and the charge time.

14. The flyback converter of claim 11, wherein the secondary controller comprises:

a charge timer configured to measure the charge time; and
a discharge timer configured to measure the discharge time.

15. The flyback converter of claim 14, wherein the charge timer is configured to start timing in response to a request for energy sent from the secondary controller to a primary controller.

16. The flyback converter of claim 14, wherein the charge timer is configured to stop timing in response to a charge stop signal, the charge stop signal indicative of a comparison of a secondary winding voltage to a low reference voltage, and
optionally wherein the low reference voltage is substantially zero volts relative to a secondary ground.

17. The flyback converter of claim 16, wherein the discharge timer is configured to start timing in response to the charge stop signal, and
optionally wherein the discharge timer is configured to stop timing in response to a discharge stop signal, the discharge stop signal indicative of a comparison of a secondary winding voltage to a high reference voltage having a value greater than the low reference voltage.

**FIG. 1A**

EP 4 568 089 A1

FIG. 1B

**FIG. 1C**

FIG. 1D

EP 4 568 089 A1

FIG. 1E

FIG. 1F

EP 4 568 089 A1

FIG. 1G

FIG. 1H

FIG. 2A

FIG. 2B

FIG. 2C

FIG. 2D

300

301 — CLOSE PRIMARY SWITCH

302 — SAMPLE A FORWARD PIN VOLTAGE

304 — OPEN PRIMARY SWITCH

306 — CLOSE A SYNCHRONOUS RECTIFIER OF A SECONDARY RETURN PATH WHILE TRANSFERRING ENERGY TO SUSTAIN AN OUTPUT VOLTAGE

308 — OPEN THE SYNCHRONOUS RECTIFIER

310 — CALCULATE A HOLD DURATION IN RELATION TO THE FORWARD PIN VOLTAGE AND THE OUTPUT VOLTAGE

312 — CLOSE THE SYNCRONOUS RECTIFIER FOR THE HOLD DURATION

313 — OPEN THE SYNCRONOUS RECTIFIER

## FIG. 3A

350

301 — CLOSE PRIMARY SWITCH

302 — SAMPLE A FORWARD PIN VOLTAGE

304 — OPEN PRIMARY SWITCH

310 — CALCULATE A HOLD DURATION IN RELATION TO THE FORWARD PIN VOLTAGE AND THE OUTPUT VOLTAGE

352 — CLOSE A SECONDARY SWITCH FOR THE HOLD DURATION

353 — OPEN THE SECONDARY SWITCH

# FIG. 3B

FIG. 4

**FIG. 5**

**FIG. 6**

600

601 EXERT SIGNAL (FL) TO TURN-ON PRIMARY SWITCH

602 START CHARGE TIMER

603 $V_{FWD} < REFL$ — NO

YES

604 STOP CHARGE TIMER

605 START DISCHARGE TIMER

606 $V_{FWD} > REFH$ — NO

YES

607 STOP DISCHARGE TIMER

608 CALCULATE HOLD DURATION BASED ON CHARGE AND DISCARGE TIMER VALUES AND IDLE RING PERIOD

609 CLOSE SYNCRONOUS RECTIFIER FOR HOLD DURATION

610 OPEN SYNCRONOUS RECTIFIER

611 $V_{FWD} < V_{OUT}$ — YES

NO

612 WAIT ONE-QUARTER OF THE IDLE RING PERIOD

Europäisches
Patentamt

European
Patent Office

Office européen
des brevets

# EUROPEAN SEARCH REPORT

**Application Number**

EP 24 21 7135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/403521 A1 (ZHENG CONG [US] ET AL) 24 December 2020 (2020-12-24) * figures 2, 4B * * paragraphs [0006], [0017], [0019] - [0023] * | 1-17 | INV.<br>H02M1/00<br>H02M3/335 |
| A | US 2022/385194 A1 (ZHANG TAO [CN] ET AL) 1 December 2022 (2022-12-01) * figures 4, 5,6 * * paragraphs [0043] - [0059] * | 1-17 | |

**TECHNICAL FIELDS
SEARCHED      (IPC)**

H02M

The present search report has been drawn up for all claims

| Place of search | Date of completion of the search | Examiner |
|---|---|---|
| The Hague | 28 March 2025 | Kail, Maximilian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 7135

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2025

| Patent document cited in search report | Publication date | Patent family member(s) | Publication date |
|---|---|---|---|
| US 2020403521 A1 | 24-12-2020 | NONE | |
| US 2022385194 A1 | 01-12-2022 | CN 114568042 A | 31-05-2022 |
| | | US 2022385194 A1 | 01-12-2022 |
| | | WO 2022067657 A1 | 07-04-2022 |

EPO FORM P0459

For more details about this annex : see Official Journal of the European Patent Office, No. 12/82

## EP 4 568 089 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63607960